# EUROPEAN PATENT SPECIFICATION

(11) **EP 2 897 005 B1**
(45) Date of publication and mention of the grant of the patent: **07.08.2019**
(21) Application number: 13836513.5
(22) Date of filing: 21.08.2013
(51) Int. Cl.: G05B 19/418, H02J 13/00

(54) **CONTROL DEVICE, CONTROL SYSTEM, CONTROL METHOD, PROGRAM, AND MEDIUM FOR RECORDING SAME**
STEUERUNGSVORRICHTUNG, STEUERSYSTEM, STEUERVERFAHREN, PROGRAMM UND MEDIUM ZUR AUFZEICHNUNG DAFÜR
DISPOSITIF DE COMMANDE, SYSTÈME DE COMMANDE, PROCÉDÉ DE COMMANDE, PROGRAMME ET SUPPORT D'ENREGISTREMENT CORRESPONDANT

(30) Priority: 13.09.2012 JP 2012201976
(43) Date of publication of application: 22.07.2015
(73) Proprietor: Omron Corporation, Kyoto-shi, Kyoto 600-8530 (JP)
(72) Inventor: KAWAI, Wakahiro, Kyoto-shi Kyoto 600-8530 (JP)
(74) Representative: Kilian Kilian & Partner
(86) International application number: PCT/JP2013/072238
(87) International publication number: WO 2014/041972

(56) References cited:
- WO-A1-2010/034333
- DE-A1-102008 001 777
- JP-A- H11 237 933
- JP-B1- 4 775 516
- US-A1- 2007 227 448

## Description

### Technical Field

The present invention relates to a control device and a control method each for controlling a plurality of device groups which constitute a plant and each of which is made up of a plurality of devices. The present invention also relates to a control system for controlling the plant.

### Background Art

In recent years, demand for small-volume production in great varieties, rather than large-volume production in small varieties, has been increasing with respect to production lines which, for example, process or assemble an electronic component, a mechanism component, or the like. This has been causing an increase in demand for a production line capable of carrying out multiple processes or a production line improved in productivity by increasing a speed of processing or assembling.

By the way, due to such a change in demand with respect to the production lines, problems have been arising such that a difference which occurs in production speed between production lines causes (i) an occurrence of or an increase in standby time to wait for completion of a previous process or (ii) an unnecessary increase in in-process stock waiting to be subjected to a subsequent process.

Meanwhile, a demand for energy saving and electric power saving in the production lines has been increasing due to recent social situations such as: an increase in concern about environmental issues; and tight electric power supply and demand. In view of this, it has been required to suppress, to a minimum amount, energy consumption such as electric power consumed during the standby time as described above.

As a technique of suppressing such electric power consumed by a production line during standby time, Patent Literature 1, for example, discloses a technique of controlling an on/off state of each of a plurality of devices, which constitute a production line, in accordance with schedule information on a device operating time table based on preliminary production planning.

However, such a method of controlling an on/off state of a production device with the use of a device operating time table, as disclosed in Patent Literature 1, cannot reflect a deviation from a production schedule which deviation frequently occurs in an actual production site due to a delay of production caused by, for example, (i) an unexpected stop of a device caused by a trouble or (ii) mis-conveyance of a component. This may causes a device to be turned off in the process of production, thereby causing a deterioration of quality or a decrease in production efficiency. That is, there is a problem that the method is not practical. Furthermore, it is necessary to frequently change a configuration of a production line in order to realize small-volume production in great varieties. Therefore, there is also a problem that schedule information on a device operating time table is complicated.

As a measure against the above problems, for example, Patent Literature 2 discloses a technique of controlling an on/off state of another device in accordance with electric energy change information on a given device constituting a production line.

According to the technique of Patent Literature 2, the on/off state of the another device is controlled in accordance with electric power value information on the given device constituting the production line which information reflects an actual operating state of the given device. It is therefore possible to carry out practical energy-saving control reflecting production time that varies depending on a progress of the production line. Moreover, no schedule information is necessary. It is therefore possible to achieve an effect that complicated schedule planning does not need to be carried out.
Further background art is known from Patent Literature 3, which shows a method for operating a technical industrial system, allowing components of the system to be switched automatically to an energy-saving rest state depending on the actual operation situation.

### Citation List

Patent Literature 1
   Japanese Patent Application Publication, Tokukaihei, No. 11-237933 A (Publication Date: August 31, 1999)
Patent Literature 2
   Japanese Patent Publication, No. 4775516 B1 (Publication Date: September 21, 2011)
Patent Literature 3
   WO 2010/034333 A1

### Summary of Invention

### Technical Problem

However, according to the technique of Patent Literature 2, the another device which can be controlled depending on a change in electric energy consumed by the given device is limited to production devices whose direct association with the given device can be defined. In a production plant constituted by a large number of processes or devices, the technique of Patent Literature 2 results in that single energy-saving control is carried out with respect to part of a production line. This causes an energy-saving effect obtained from such control to be limited. Therefore, a sufficient energy-saving effect may not be obtained.

Meanwhile, in a production plant in which each production line produces a product by processing a various types of components, it is necessary to change an operating condition, such as a configuration and production time of the each production line, depending on a production schedule, a progress, and a product specification of the each production line. According to the technique of Patent Literature 2, it is not possible to sufficiently deal with such changes. Therefore, an energy-saving element which can be reduced may be missed.

The present invention has been made in view of the above problems, and an object of the present invention is to more effectively reduce energy consumed by a plant constituted by a plurality of device groups.

### Solution to Problem

In order to attain this objective, the present invention provides a control device for controlling operation of a control-target device group according to claim 1 and a method for causing a control device to control operation of a control-target device group according to claim 9. A control device according to an aspect of the invention is a control device for controlling operation of a control-target device group which is one of a plurality of device groups each made up of a plurality of devices, including: an operational information obtaining section which obtains, from each of associated device groups, operational information indicative of an operational statuses of the each of the associated device groups, the associated device groups being device groups associated in advance with a control-target device group among a plurality of device groups; a storing section in which first control setting information is stored, the first control setting information specifying, for each combination of operational statuses of the associated device groups, contents of control carried out with respect to the control-target device group; and an operation control section which controls operation of the control-target device group in accordance with (i) the operational information on the each of the associated device groups, which operational information has been obtained by the operational information obtaining section, and (ii) the first control setting information stored in the storing section.

### Advantageous Effects of Invention

According to the above configuration, it is possible to control operation of a control-target device group depending on a combination of operational statuses of a plurality of associated device groups, even in a case where the control-target device group is affected by the operational statuses of the plurality of associated device groups. This makes it possible to effectively reduce energy consumed by a plant constituted by a plurality of device groups.

### Brief Description of Drawings

Fig. 1 is an explanatory view illustrating (i) an overall configuration of a production plant (plant) in accordance with an embodiment of the present invention and (ii) how a workpiece is conveyed in the production plant.
Fig. 2 is an explanatory view illustrating how information is transmitted between production devices provided in the production plant illustrated in Fig. 1.
Fig. 3 is an explanatory view schematically illustrating a configuration of a control system for controlling the production plant illustrated in Fig. 1.
Fig. 4 is an explanatory view illustrating an example of control setting information stored in a storing section of a hub device (representative device) provided in each production line of the production plant illustrated in Fig. 1.
Fig. 5 is an explanatory view illustrating an example of control setting information stored in a storing section of a hub device (representative device) provided in each production line of the production plant illustrated in Fig. 1.
Fig. 6 is an explanatory view illustrating an example of control setting information stored in a storing section of a hub device (representative device) provided in each production line of the production plant illustrated in Fig. 1.
Fig. 7 is a flowchart illustrating how the hub device (representative device), provided in each production line of the production plant illustrated in Fig. 1, carries out a process.

### Description of Embodiments

The following description will discuss an embodiment of the present invention.

### (1-1. Overall configuration of production plant 100)

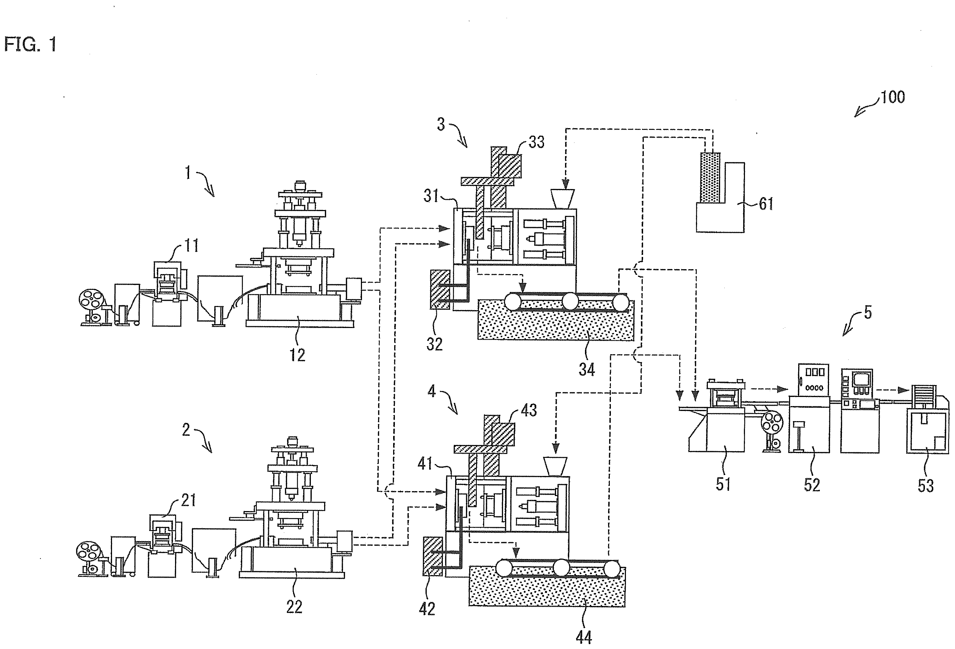

Fig. 1 is an explanatory view illustrating (i) an overall configuration of a production plant (plant) 100 in accordance with the present embodiment and (ii) how a workpiece (object to be processed) is conveyed in the production plant 100.

As illustrated in Fig. 1, the production plant 100 includes a production line 1, a production line 2, a production line 3, a production line 4, a production line 5, and a resin drying device 61. Each of the production lines 1 through 5 is a small group (associated device group) made up of a plurality of production devices which are closely associated with each other in operation.

The production line 1 includes a punch press 11 and a bending press 12. The punch press 11 produces a metal terminal (workpiece) having a given shape by pressing a metal hoop material. The bending press 12 precisely bends the metal terminal, produced by the punch press 11, while pressing the metal terminal so that the metal terminal has a given shape. The metal terminal thus bent by the bending press 12 is supplied to each of the production lines 3 and 4.

The production line 2 includes a punch press 21 and a bending press 22, as well as the production line 1. The punch press 21 produces a metal terminal (workpiece) having a given shape by pressing a metal hoop material. The bending press 22 precisely bends the metal terminal, produced by the punch press 21, while pressing the metal terminal so that the metal terminal has a given shape. The metal terminal thus bent by the bending press 22 is supplied to each of the production lines 3 and 4.

Note that, in the present embodiment, the production line 1 produces a metal terminal different, in type, from that produced by the production line 2. In the other points, the production line 1 is similar, in configuration, to the production line 2.

The production line 3 includes an injection molding device 31, a mold temperature adjusting device 32, a removing device (removing robot) 33, and a conveying device 34.

The injection molding device 31 inserts, into a resin pellet supplied from the resin drying device 61, metal terminals produced by the respective production lines 1 and 2, and molds a product from the resin pellet and the metal terminals.

The mold temperature adjusting device 32 adjusts a temperature of a mold provided in the injection molding device 31.

The removing device 33 removes, from the injection molding device 31, the product molded by the injection molding device 31, and transfers such a molded product to the conveying device 34.

The conveying device 34 supplies, to the production line 5, the product molded by the injection molding device 31. In this manner, a product in which two types of metal terminals, different in shape from each other, are inserted is molded by the injection molding device 31, and is supplied to the production line 5.

The production line 4 includes an injection molding device 41, a mold temperature adjusting device 42, a removing device (removing robot) 43, and a conveying device 44, as well as the production line 3.

The injection molding device 41 inserts, into a resin pellet supplied from the resin drying device 61, metal terminals produced by the respective production lines 1 and 2, and molds a product from the resin pellet and the metal terminals.

The mold temperature adjusting device 42 adjusts a temperature of a mold provided in the injection molding device 41.

The removing device 43 removes, from the injection molding device 41, the product molded by the injection molding device 41, and transfers such a molded product to the conveying device 44.

The conveying device 44 supplies, to the production line 5, the product molded by the injection molding device 41. In this manner, a product in which two types of metal terminals, different in shape from each other, are inserted is molded by the injection molding device 41, and is supplied to the production line 5.

Note that, in the present embodiment, the production line 3 is similar, in configuration, to the production line 4, and a molded product supplied from the production line 3 to the production line 5 is identical to that supplied from the production line 4 to the production line 5. That is, in the present embodiment, one type of molded product, which has an identical shape and in which two types of metal terminals that are different in shape from each other are inserted, is produced by each of the production lines 3 and 4.

The resin drying device (shared device) 61 dries a resin pellet which is a material used in a process carried out by each of the injection molding devices 31 and 41, and supplies the resin pellet to the injection molding devices 31 and 41.

The production line 5 includes a metal plate press fitting device 51, an inspection device (image processing device) 52, and a stocker 53.

The metal plate press fitting device 51 presses a metal plate into a molded product supplied from each of the production lines 3 and 4.

The inspection device 52 (i) captures an image of a molded product into which a metal plate is pressed by the metal plate press fitting device 51, (ii) inspects an appearance of the molded product in accordance with data of such a captured image, and (iii) transfers, to the stocker 53, the molded product which has passed such appearance inspection.

The stocker 53 stocks therein a molded product supplied from the inspection device 52 (a finished product which has passed the appearance inspection).

Note that the production plant 100 is configured such that a process carried out by each of the production lines 1 and 2 has a production takt (processing speed) twice as fast as that of the injection molding device 31 (or the injection molding device 41), which carries out an injection molding process subsequent to the process carried out by each of the production lines 1 and 2. Therefore, in the present embodiment, two injection molding devices 31 and 41 provided in the production lines 3 and 4, respectively, are each configured to carry out the injection molding process.

Note also that the production line 5 has a processing speed three times as fast as each processing speed of the production lines 3 and 4. Therefore, a mere single production line 5 is provided so as to carry out a process with respect to a molded product supplied from each of the production lines 3 and 4.

Thus, according to the production plant 100, each production takt of the production lines 1 and 2 is set to be identical to a total production takt of the production lines 3 and 4. This causes standby time or stock not to occur in the production lines 1 through 4 in normal operation. In contrast, the production takt of the production line 5 is greater than each production takt of the production lines 3 and 4. This causes standby time, to wait for a workpiece to be supplied from each of the production lines 3 and 4, to occur in the production line 5 even in normal operation. The production line 5 is set to start the process every time workpieces supplied from the production lines 3 and 4 are stocked in given amount.

In a case where at least one of the production lines 1 and 2 is stopped due to an occurrence of a trouble, metal terminals necessary for a process carried out by each of the production lines 3 and 4 becomes insufficient. This causes standby time to occur in both of the production lines 3 and 4. That is, for example, in a case where even one of the plurality of production devices (the punch press 11 and the bending press 12) provided in the production line 1 and the plurality of production devices (the punch press 21 and the bending press 22) provided in the production line 2 is stopped, standby time, to wait for a metal terminal to be supplied from the production line 1 or 2, occurs in the production lines 3 and 4.

In a case where merely any one of the production lines 3 and 4 is stopped (for example, in a case where merely any one of the injection molding devices 31 and 41 is stopped), the total production takt of the production lines 3 and 4 decreases to half of it in normal operation. This causes an increase in in-process stock in each of the production lines 1 and 2, unless each production takt of the production lines 1 and 2 is decreased to not more than half of it in normal operation.

In a case where (i) any one of the production lines 1 and 2 is stopped and (ii) each of the production lines 3 and 4 is stopped, supply of a product from each of the production lines 3 and 4 is stopped. Therefore, the production line 5 does not need to be operated. In a case where any one of the production lines 3 and 4 is stopped, the standby time increases in the production line 5 because supplied products reduce in amount.

In a case where the production line 5 is stopped (for example, in a case where the inspection device 52 is stopped), in-process stock increases in each of the production lines 3 and 4 unless the production lines 1 through 4 are stopped.

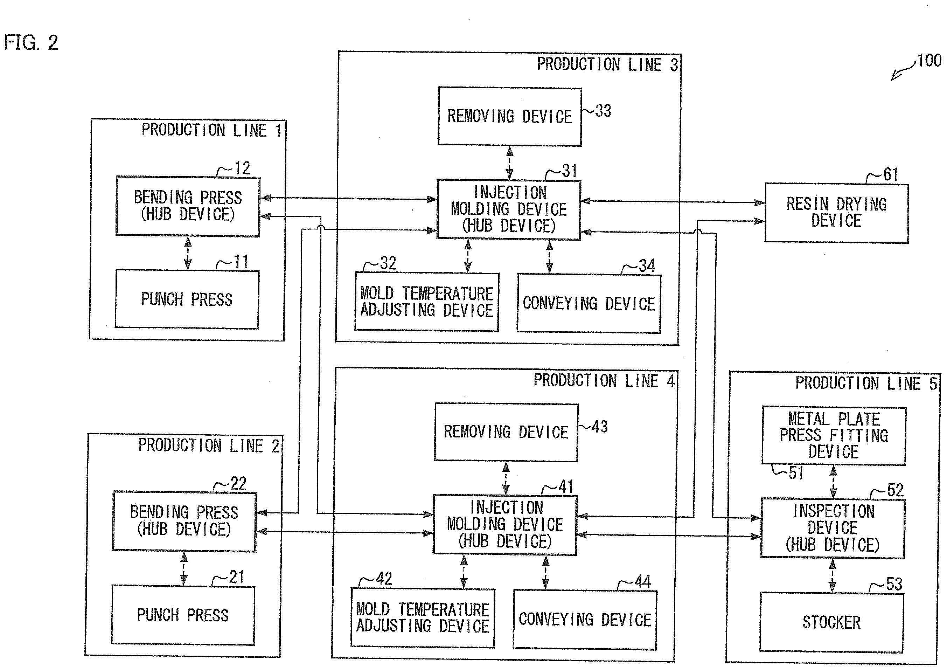

Fig. 2 is an explanatory view illustrating how information is transmitted between production devices provided in the production plant 100.

In the production plant 100, as illustrated in Fig. 2, a plurality of production devices are provided in each of production lines, and one of the plurality of production devices provided in the each of the production lines is set, in advance, as a hub device (representative device). The one of the plurality of production devices which one is set as the hub device of the each of the production lines is, for example, a device (i) which has close association, in terms of operation, with the other one(s) of the plurality of production devices which one(s) constitutes the each of the production lines and (ii) which carries out a major process in the each of the production lines. Specifically, in the present embodiment, the bending press 12 is set as a hub device of the production line 1, the bending press 22 is set as a hub device of the production line 2, the injection molding device 31 is set as a hub device of the production line 3, the injection molding device 41 is set as a hub device of the production line 4, and the inspection device 52 is set as a hub device of the production line 5.

Each hub device transmits operational information on itself to each of hub devices provided in respective associated lines (associated device groups), and receives operational information on the each of the hub devices from the each of the hub devices. Each of the associated lines is a production line (i) which is associated in advance with a control-target line (control-target device group) in which the each hub device is provided and (ii) which, for example, carries out, prior or subsequent to the control-target line, a process with respect to a workpiece to be processed. With this configuration, operation of each (control-target line) of the production lines is controlled depending on operational information obtained from other ones (associated lines) of the production lines which ones are associated with the each of the production lines. How to control each of the production lines will be later described in detail.

### (1-2. Configuration of control system)

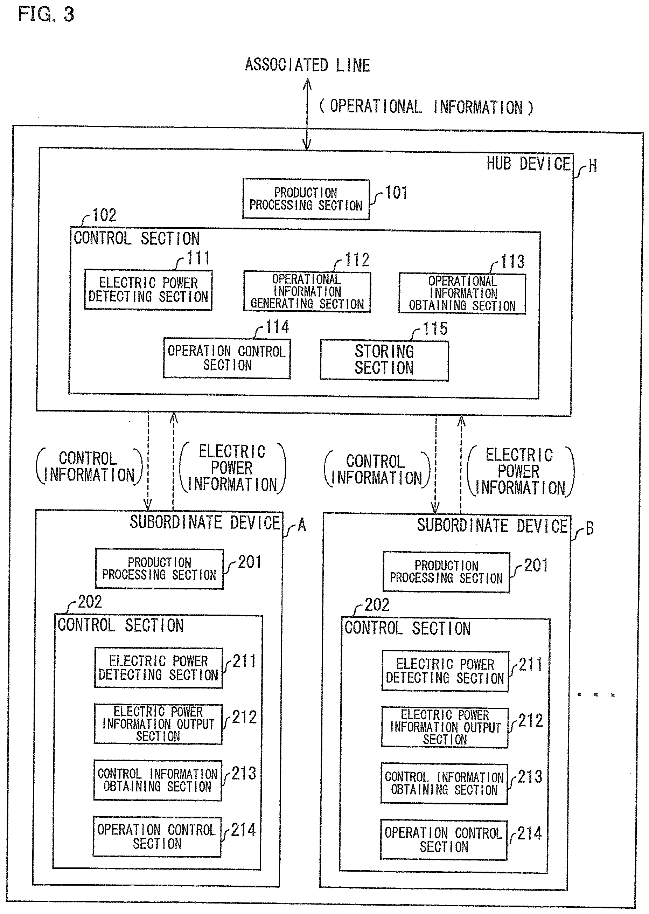

Fig. 3 is an explanatory view schematically illustrating a configuration of a control system for controlling the production plant 100. As illustrated in Fig. 3, a plurality of production devices are provided in each of production lines. One of the plurality of production devices is set as a hub device H, and the other one(s) of the plurality of production devices is/are set as a subordinate device(s) A, B, .... The hub device H controls, depending on operational statuses of associated lines, operation of the hub device H and operation of the subordinate device(s) provided in the each (control-target line) of the production lines in which the hub device H is provided. By combining the production lines each including such a hub device H, a control system for controlling the production plant in accordance with the present embodiment is configured.

Note that, in the present embodiment, as has been described, the bending press 12 provided in the production line 1 is set as a hub device H, the bending press 22 provided in the production line 2 is set as a hub device H, the injection molding device 31 provided in the production line 3 is set as a hub device H, the injection molding device 41 provided in the production line 4 is set as a hub device H, and the inspection device 52 provided in the production line 5 is set as a hub device H.

Note also that: the punch press 11 provided in the production line 1 serves as a subordinate device; the punch press 21 provided in the production line 2 serves as a subordinate device; the mold temperature adjusting device 32, the removing device 33, and the conveying device 34, provided in the production line 3, each serve as a subordinate device; the mold temperature adjusting device 42, the removing device 43, and the conveying device 44, provided in the production line 4, each serve as a subordinate device; and the metal plate press fitting device 51 and the stocker 53, provided in the production line 5, each serve as a subordinate device.

According to Fig. 3, a hub device H includes a production processing section 101 and a control section (control device) 102. Each of subordinate devices A, B, ... includes a production processing section 201 and a control section 202.

The production processing section 101 provided in the hub device H is a processing section which carries out a production process that the hub device H undertakes in a corresponding production line. That is, in a case where the bending press 12 provided in the production line 1 or the bending press 22 provided in the production line 2 serves as a hub device H, the production processing section 101 carries out a bending press process. In a case where the injection molding device 31 provided in the production line 3 or the injection molding device 41 provided in the production line 4 serves as a hub device H, the production processing section 101 carries out an injection molding process. In a case where the inspection device 52 provided in the production line 5 serves as a hub device H, the production processing section 101 carries out an inspection process.

The control section 102 provided in the hub device H includes an electric power detecting section 111, an operational information generating section 112, an operational information obtaining section 113, an operation control section 114, and a storing section 115.

The electric power detecting section 111 detects an amount of electric power consumed by the production processing section 101.

The operational information generating section 112 determines an operational status of the production processing section 101 in accordance with an amount of electric power consumed by the production processing section 101 which amount is detected by the electric power detecting section 111. Depending on a result of such determination, the operational information generating section 112 generates operational information indicative of an operational status of the hub device H, and supplies the operational information to each of associated lines (hub devices provided in the respective associated lines) each of which is a production line associated in advance with the hub device H. Examples of the operational information encompass: information indicating whether the hub device H is in an operating state or a stopped state (non-operating state); and information indicating whether the hub device H is in a normal operating state, a low-speed operating state, or a stopped state (non-operating state).

For example, the operational information generating section 112 compares, with a threshold set in advance, an integrated value of an amount of electric power consumed by the production processing section 101 from given time ago to a present time. In a case where the integrated value is equal to or more than the threshold, the operational information generating section 112 determines that the hub device H is in an operating state. In a case where the integrated value is less than the threshold, the operational information generating section 112 determines that the hub device H is in a stopped state (non-operating state).

Alternatively, the operational information generating section 112 compares, with first and second thresholds set in advance, an integrated value of an amount of electric power consumed by the production processing section 101 from given time ago to a present time. In a case where the integrated value is equal to or more than the first threshold, the operational information generating section 112 determines that the hub device H is in a normal operating state. In a case where the integrated value is less than the first threshold and equal to or more than the second threshold, the operational information generating section 112 determines that the hub device H is in a low-speed operating state. In a case where the integrated value is less than the second threshold, the operational information generating section 112 determines that the hub device H is in a stopped state (non-operating state).

Note that, in the present embodiment, each hub device has an automatic operation setting mode and a manual operation setting mode. The automatic operation setting mode is a mode in which a hub device is registered in the control system for controlling the production plant 100 and operation of each of production devices, provided in a production line to which the hub device belongs, is controlled depending on operational statuses of associated lines. Meanwhile, the manual operation setting mode is a mode in which the hub device is not registered in the control system for controlling the production plant 100 and the operation of the each of the production devices is individually controlled, irrespective of operation of the associated lines. The automatic operation setting mode is used in a case where the production plant 100 carries out a process for the purpose of high-volume production under a production schedule. On the other hand, the manual operation setting mode is used in a case where, for example, a production line is manufactured by way of trial or in a case where operation of a production line is tested.

The operational information obtaining section 113 obtains, from each of the associated lines (the hub devices provided in the respective associated lines) each of which is a production line associated in advance with the hub device H (or the production line to which the hub device H belongs), operational information indicative of an operational status of the each of the associated lines (or the hub devices provided in the respective associated lines).

In accordance with (a) the operational information on each of the associated devices which information is obtained by the operational information obtaining section 133 and (b) control setting information stored in the storing section 115, the operation control section 114 (i) controls operation of the production processing section 101 provided in the hub device H, (ii) generates control information in accordance with which operation of the subordinate devices, provided in the production line (control-target line) to which the hub device H belongs, is controlled, and (iii) supplies the control information to the subordinate devices.

The storing section 115 stores therein control setting information (first setting information) in which a combination of operational statuses of the associated lines is associated with corresponding contents of control (for example, turning on/off the control-target line or changing a processing speed) carried out with respect to the control-target line.

The storing section 115 further stores therein control-target information (second setting information) which specifies, for each operational status of the hub device H, contents of control carried out with respect to production devices (subordinate devices) other than the hub device H, among a plurality of production devices provided in the control-target line.

The storing section 115 further stores therein control setting information (third setting information) in which operational statuses (or electric power consumption) of the production devices (subordinate devices) other than the hub device H, among the plurality of production devices provided in the control-target line, is associated with contents of control carried out with respect to the production processing section 101 provided in the hub device H.

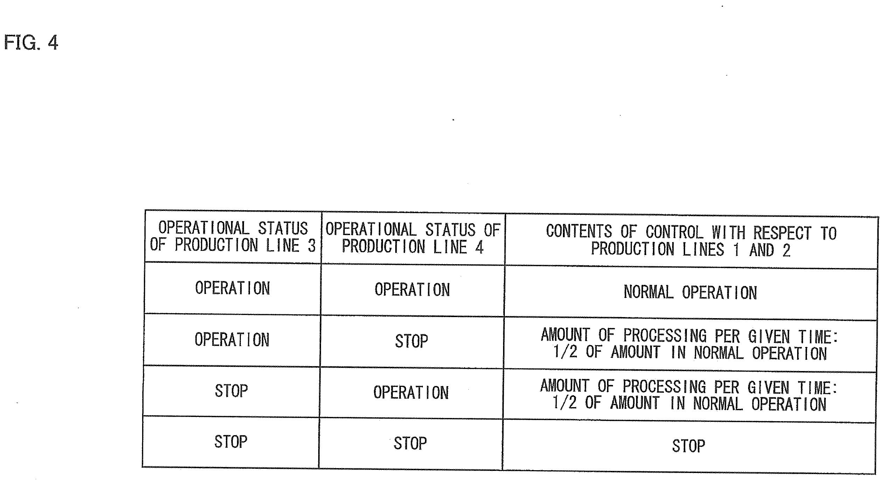

Fig. 4 is an explanatory view illustrating an example of control setting information (first setting information) stored in a storing section 115 of the bending press (hub device) 12 provided in the production lines 1 and 2.

According to the example illustrated in Fig. 4, each of the production lines 1 and 2 (the bending presses 12 and 22, which are hub devices provided in the production lines 1 and 2, respectively) is set to operate in a normal operating state in a case where each of the production lines (associated lines) 3 and 4 is in an operating state (in a case where each of the injection molding devices 31 and 41, which are hub devices provide in the production lines 3 and 4, respectively, is in an operating state).

Further, according to the example illustrated in Fig 4, each of the production lines 1 and 2 (the bending presses 12 and 22, which are hub devices provided in the production lines 1 and 2, respectively) is set to operate in a low-speed operating state in which a processing speed (an amount of metal terminals produced per given time) is decreased to half of it in the normal operating state, in a case where (i) any one of the production lines 3 and 4 is in an operating state and (ii) the other is in a stopped state.

Note that examples of a method of causing each of the production lines 1 and 2 to operate in the low-speed operating state encompass: a method in which an operation speed itself of each production device (the bending presses 12 and 22) is decreased; and a method in which standby time is set until when each production device (the bending presses 12 and 22) starts processing a next metal terminal, every time the each production device finishes processing a given amount of metal terminals (workpieces). In a case where the standby time is set, the each production device can be turned off during the standby time. Alternatively, supply of electric power to a production processing section provided in the each production device can be stopped.

Further, according to the example illustrated in Fig. 4, each of the production lines 1 and 2 (the injection molding devices 31 and 41, which are hub devices provided in the production lines 3 and 4, respectively) is set to be in a stopped state in a case where each of the production lines 3 and 4 is in a stopped state. Note that each production device (the bending presses 12 and 22) can be turned off while each of the production lines 1 and 2 is in the stopped state. Alternatively, supply of electric power to the production processing section provided in the each production device can be stopped.

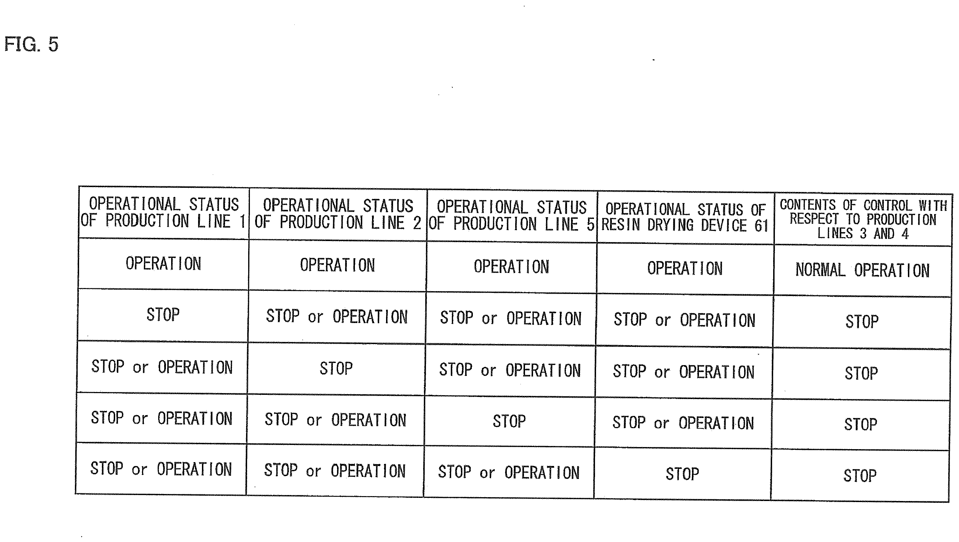

Fig. 5 is an explanatory view illustrating an example of control setting information (first setting information) stored in each storing section 115 of the injection molding devices (hub devices) 31 and 41 provided in the production lines 3 and 4, respectively.

According to the example illustrated in Fig. 5, each of the production lines 3 and 4 (the injection molding devices 31 and 41, which are hub devices provided in the production lines 3 and 4, respectively) is set to operate in a normal operating state in a case where the production lines (associated lines) 1, 2, and 5 and the resin drying device 61 are each in an operating state.

Further, according to the example illustrated in Fig. 5, each of the production lines 3 and 4 (the injection molding devices 31 and 41, which are hub devices provided in the production lines 3 and 4, respectively) is set to be in an stopped state in a case where any one of the production lines (associated lines) 1, 2, and 5 and the resin drying device 61 is in an stopped state. Note that, while each of the production lines 3 and 4 is in the stopped state, each production device (the injection molding devices 31 and 41) can be tuned off. Alternatively, supply of electric power to a production processing section provided in the each production device can be stopped.

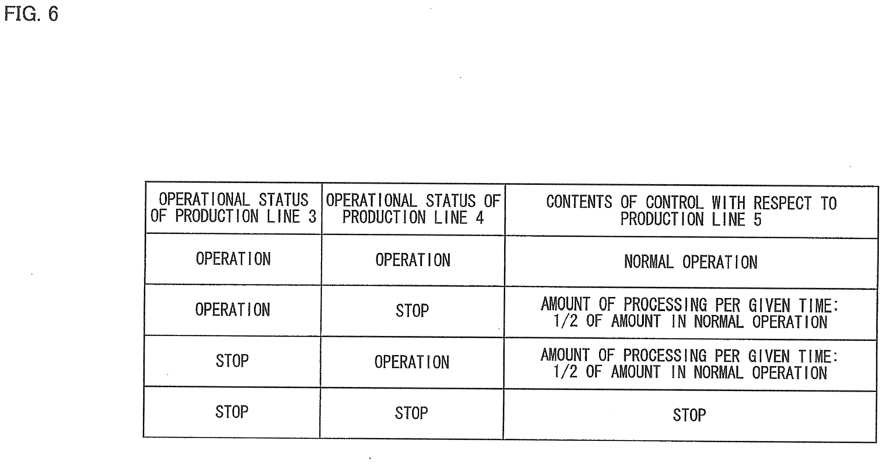

Fig. 6 is an explanatory view illustrating an example of control setting information (first setting information) stored in a storing section 115 of the inspection device (hub device) 52 provided in the production line 5.

According to the example illustrated in Fig. 6, the production line 5 (the inspection device 52, which is a hub device provided in the production line 5) is set to operate in a normal operating state in a case where each of the production lines (associated lines) 3 and 4 is in an operating state (in a case where each of the injection molding devices 31 and 41 provided in the production lines 3 and 4, respectively, is in an operating state).

Further, according to the example illustrated in Fig. 6, the production line 5 (the inspection device 52, which is a hub device provided in the production line 5) is set to operate in a low-speed operating state in which a processing speed (an amount of molded products inspected per given time) is decreased to half of it in the normal operating state, in a case where (i) any one of the production lines (associated lines) 3 and 4 is in the operating state and (ii) the other is in the stopped state.

Note that examples of a method of causing the production line 5 to operate in the low-speed operating state encompass a method in which (i) the production line 5 is arranged to sequentially or collectively process a given amount of molded products supplied to the production line 5 and (ii) standby time, until when the production line 5 starts processing a next given amount of molded products after processing the given amount of molded products, is set to be longer than a period of the normal operating state. Note also that each production device provided in the production line 5 can be tuned off during the standby time. Alternatively, supply of electric power to a production processing section provided in the each production device can be stopped.

The operation control section 114 generates, in accordance with (i) an operational status of the hub device H and (ii) the second setting information stored in the storing section 115, control information used to control operation of the other production devices (subordinate devices) provided in the production line to which the hub device H belongs, and then supplies the control information to the other production devices. The operational information generating section 112 generates operational information indicative of the operational status of the hub device H, and supplies the operational information to each of the associated lines (the hub devices provided in the respective associated lines).

The operation control section 114 controls operation of the production processing section 101 provided in the hub device H, in accordance with (i) operational statuses of the subordinate devices and (ii) the third setting information stored in the storing section 115. Further, the operation control section 114 generates, in accordance with (i) the operational status of the hub device H and (ii) the second setting information stored in the storing section 115, control information used to control operation of the other production devices (subordinate devices), and supplies the control information to the other production devices. The operational information generating section 112 generates operational information indicative of the operational status of the hub device H, and supplies the operational information to each of the associated lines (the hub devices provided in the respective associated lines).

Note that the operation control section 114 detects an operational status of each of the subordinate devices in accordance with an amount of electric power consumed by the each of the subordinate devices. For example, the operation control section 114 compares, with a threshold set in advance, an integrated value of an amount of electric power consumed by a subordinate device from given time ago to a present time. In a case where the integrated value is decreased to less than the threshold, the operation control section 114 detects that the subordinate device is stopped. In a case where any one of the subordinate devices is stopped, the operation control section 114 stops the production line to which the hub device H belongs. That is, the operation control section 114 stops production operation of the production processing section 101 provided in the hub device H, and supplies, to the subordinate devices, a control signal for stopping production operation of the subordinate devices. In a case where production operation of the hub device is thus stopped, an operation signal indicating that the hub device H is in a stopped state is generated by the operational information generating section 112, and supplied to each of the associated lines.

Alternatively, the operation control section 114 can detect a processing speed of each of the subordinate devices in accordance with an amount of electric power consumed by the each of the subordinate devices, and control each of the plurality of production devices (the hub device H and the subordinate devices), provided in the production line to which the hub device H belongs, so as to operate at a processing speed corresponding to the processing speed thus detected.

As illustrated in Fig. 3, each of the subordinate devices A, B, ... includes the production processing section 201 and the control section 202. The control section 202 includes an electric power detecting section 211, an electric power information output section 212, a control information obtaining section 213, and an operation control section 214.

The production processing section 201 provided in each subordinate device carries out a production process assigned to the each subordinate device. For example, in a case where the punch press 11 provided in the production line 1 or the punch press 21 provided in the production line 2 serves as a subordinate device, the production processing section 201 carries out a punch press process. In a case where the mold temperature adjusting device 32 provided in the production line 3 or the mold temperature adjusting device 42 provided in the production line 4 serves as a subordinate device, the production processing section 201 adjusts a temperature of a mold. In a case where the removing device 33 provided in the production line 3 or the removing device 43 provided in the production line 4 serves as a subordinate device, the production processing section 201 removes a molded production (workpiece) from an injection molding device. In a case where the conveying device 34 provided in the production line 3 or the conveying device 44 provided in the production line 4 serves as a subordinate device, the production processing section 201 conveys a molded product (workpiece) removed by a removing section from an injection molding device. In a case where the metal plate press fitting device 51 provided in the production line 5 serves as a subordinate device, the production processing section 201 presses a metal into a molded product. In a case where the stocker 53 provided in the production line 5 serves as a subordinate device, the production processing section 201 stocks therein a product which has passed an inspection carried out by the inspection device 52.

The electric power detecting section 211 detects an amount of electric power consumed by the production processing section 201. The electric power information output section 212 generates electric power information which varies depending on the amount of the electric power detected by the electric power detecting section 211, and supplies the electric power information to the hub device H of the production line to which the subordinate device belongs. Note that the electric power information can be alternatively indicative of a detection value of the amount of the electric power consumed by the production processing section 201 or can be alternatively an integrated value obtained by integrating the detection value of the amount of the electric power with given time.

The control information obtaining section 213 obtains control information supplied from the hub device H. Note that examples of the control information encompass control information used to stop production operation of the subordinate device, control information used to turn off the subordinate device, and control information used to change a processing speed of the subordinate device.

The operation control section 214 controls operation of the production processing section 201 in accordance with control information obtained by the control information obtaining section 213 from the hub device H.

The resin drying device 61 has a configuration similar to that of the hub device H. That is, the resin drying device 61 incudes: a production processing section 101 which dries a resin pellet and supplies the resin pellet thus dried to each of the injection molding devices 31 and 41; and a control section 102 including an electric power detecting section 111, an operational information generating section 112, an operational information obtaining section 113, an operation control section 114, and a storing section 115.

The electric power detecting section 111 detects an amount of electric power consumed by the production processing section 101.

The operational information generating section 112 determines an operational status of the production processing section 101 in accordance with an amount of electric power consumed by the production processing section 101 which amount is detected by the electric power detecting section 111. Depending on a result of such determination, the operational information generating section 112 generates operational information indicative of an operational status of the resin drying device 61, and supplies the operational information to each of production devices (the injection molding devices 31 and 41) associated in advance with the resin drying device 61. With this, in a case where the resin drying device 61 is stopped due to, for example, a trouble with the resin drying device 61, operational information indicating that the resin drying device 61 is stopped is supplied to each of the injection molding devices 31 and 41, and the injection molding devices 31 and 41 are stopped in accordance with the control setting information illustrated in Fig. 6.

The operational information obtaining section (obtaining section) 113 obtains, from each of the production devices (the injection molding devices 31 and 41) associated in advance with the resin drying device 61, operational information indicative of an operational status of the each of the production devices.

The operation control section (control section) 114 controls operation of the production processing section 101 provided in the resin drying device 61 in accordance with (i) operational information on the each of the production devices which information is obtained by the operational information obtaining section 113 and (ii) control setting information (control information) stored in the storing section 115.

The storing section (setting storing section) 115 stores therein control setting information (setting information) in which a combination of operational statuses of the production devices (injection molding devices 31 and 41) associated in advance with the resin drying device 61 is associated with corresponding contents of control carried out with respect to the resin drying device 61. In the present embodiment, the control setting information is set such that, in a case where each of the injection molding devices (hub devices) 31 and 41 is stopped, operation of the resin drying device 61 is stopped and the resin drying device 61 is turned off.

### (1-3. Control of operation of production plant 100)

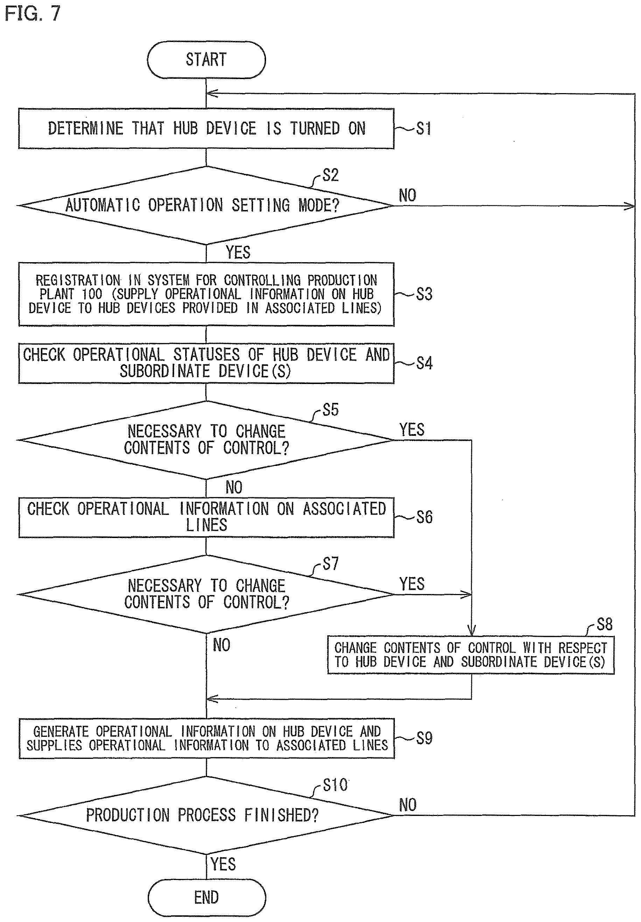

Next, how the control section 102 of the hub device provided in each of the production lines carries out control will be described below with reference to a flowchart illustrated in Fig. 7.

First, a control section 102 provided in a hub device determines that the hub device is turned on (step S1). This determination can be made, for example, depending on whether or not an amount of electric power consumed by a production processing section 101, which amount is detected by an electric power detecting section 111, is increased to a given value or more.

Next, the control section 102 determines whether the hub device is set in an automatic operation setting mode or a manual operation setting mode (step S2). Note that the automatic operation setting mode and the manual operation setting mode can be switched, for example, in a case where a manager of production lines operates a mode switching button provided on the hub device.

In a case where the control section 102 determines, in the step S2, that the hub device is not set in the automatic operation setting mode, the control section 102 returns to the step S1.

In a case where the control section 102 determines, in the step S2, that the hub device is set in the automatic operation setting mode, the control section 102 registers the hub device in a control system for controlling a production plant 100 (step S3). That is, the control section 102 supplies, to hub devices provided in associated lines, operational information on the hub device so as to register the hub device in the control system, and carries out a process in the automatic operation setting mode in which a production line is controlled in consideration of operational statuses of associated lines.

Next, the control section 102 checks operational statuses of the hub device and a subordinate device(s) provided in a production line to which the hub device belongs (step S4). Specifically, the control section 102 checks an operational status of the hub device in accordance with the amount of the electric power consumed by the production processing section 101 provided in the hub device which amount is detected by the electric power detecting section 111, and checks an operational status(es) of the subordinate device(s) in accordance with electric power information, on the subordinate device(s), supplied from the subordinate device(s).

Next, the control section 102 determines whether or not it is necessary to change contents of control carried out with respect to the production line to which the hub device belongs, in accordance with the operational statuses of the hub device and the subordinate device(s) which operational statuses have been checked in the step S4 (step S5). That is, the control section 102 determines whether or not it is necessary to change contents of control carried out with respect to the subordinate device(s), in accordance with (i) the operational status of the hub device and (ii) second setting information stored in a storing section 115, and determines whether or not it is necessary to change contents of control carried out with respect to each of the hub device and the subordinate device(s), in accordance with the operational status(es) of the subordinate device(s) and the second setting information stored in the storing section 115.

In a case where the control section 102 determines, in the step S5, that it is not necessary to change the contents of control carried out with respect to the production line to which the hub device belongs, the control section 102 obtains operational information from each of the associated lines via the operational information obtaining section 113, and checks the operational statuses of the associated lines (operational statuses of the hub devices provided in the associated lines) (step S6).

The control section 102 then determines whether or not it is necessary to change the contents of control carried out with respect to the production line to which the hub device belongs, in accordance with (i) a combination of the operational statuses of the associated lines and (ii) first setting information stored in the storing section 115 (step S7).

In a case where the control section 102 determines, in the step S5 or S7, that it is necessary to change the contents of control carried out with respect to the production line to which the hub device belongs, the control section 102 changes the contents of control carried out with respect to the production line to which the hub device belongs, depending on the operational statuses of the hub device and the subordinate device(s) which operational statuses have been checked in the step S4 or depending on the operational statuses of the associated lines which operational statuses have been checked in the step S7 (step S8).

Note that, as a method of changing, depending on the operational statuses of the hub device and the subordinate device(s), how to control the production line, a method similar to that disclosed in the aforementioned Patent Literature 2 can be, for example, employed. For example, in a case where the control section 102 checks, in the step S4, that the production processing section 101 provided in the hub device or the production processing section 201 provided in the subordinate device(s), is stopped, the control section 102 stops the hub device and the subordinate device(s). In this case, the control section 102 can be arranged to turn off the hub device and the subordinate device(s) (or stop supply of electric power to the production processing section 101 provided in the hub device and to the production processing section 201 provided in the subordinate device(s)).

Further, in a case where the control section 102 checks, in the step S7, that the associated lines are stopped, the control section 102 determines the contents of control carried out with respect to each of production devices provided in the production line to which the hub device belongs, depending on the first setting information stored in the storing section 115.

(i) In a case where the control section 102 determines, in the step S7, that it is not necessary to change the contents of control carried out with respect to the production line to which the hub device belongs and (ii) in a case where the control section 102 has changed, in the step S8, the contents of control carried out with respect to the production line to which the hub device belongs, the control section 102 generates operational information on the hub device, and supplies the operational information to each of the associated lines (each of the hub devices provided in the respective associated lines) (step S9). Specifically, the electric power detecting section 111 detects an amount of electric power consumed by the production processing section 101. The operational information generating section 112 then detects an operational status of the production processing device 101 in accordance with the amount of the electric power which amount is detected by the electric power detecting section 111, generates operational information based on a result of such a detection, and supplies the operational information to each of the associated lines (each of the hub devices provided in the associated lines).

Thereafter, the control section 102 determines whether or not to end a production process. In a case where the control section 102 determines to continue the production process, the control section 102 returns to the step S1.

Note that, in a case where (i) a production device is stopped due to, for example, a trouble and then (ii) the production device returns to a normal operation as a result of measures taken against a cause of such a stop, a production line to which the production device belongs is again registered in the control system, for controlling the production plant 100, by manually or automatically restarting the production device and carrying out the steps S1 through 3. This allows a production line to be automatically registered in the control system, even in a case where a system change, such as rearrangement of production lines due to addition or removal of a production line or due to a change in production planning, occurs.

### (1-4. Summary of Embodiment 1)

According to the present embodiment, as has been described, each of a plurality of production lines is made up of production devices which have direct association therebetween, and one of the production devices which one undertakes a major role in the each of the plurality of production lines is set as a hub device. With respect to each of the plurality of production lines, other ones of the plurality of production lines which ones affect an operational status of the each of the plurality of production lines are set as associated lines, and control setting information (first setting information) is set in advance in which a combination of operational statuses of the associated lines (hub devices provided in the respective associated lines), associated with the each of the plurality of production lines to which the hub device belongs, is associated with contents of control carried out with respect to the hub device provided in the each of the plurality of production lines.

Further, set in advance are (i) control setting information (second setting information) indicative of contents of control carried out with respect to a subordinate device(s) which contents vary depending on an operational status of the hub device and (ii) control setting information (third setting information) indicative of contents of control carried out with respect to the hub device which contents vary depending on an operational status(es) of the subordinate device(s).

As such, in a case where there is a change in operational status of any one of production devices provided in the production plant 100 (for example, in a case where any one of the production devices is stopped), operation of a hub device provided in a production line to which the any one of the production devices belongs is controlled depending on the change in operational status of the any one of production device. In a case where an operational status of the hub device is accordingly changed, operation of a subordinate device(s) provided in the production line, to which the hub device belongs, is controlled depending on such a change in operational status of the hub device, and operational information indicative of the operational status of the hub device is supplied to each of hub devices provided in respective associated lines. Meanwhile, in a production line which has received operational information from each of associated lines, operation of a hub device and a subordinate device(s) provided in the production line is controlled depending on a combination of operational statuses of the associated lines associated with the production line.

With this configuration, it is possible to sequentially change contents of control, carried out with respect to each of the production devices provided in the production plant 100, depending on a change in operational status of any one of the production devices provided in the production plant 100. This allows energy-saving control to be easily carried out with respect to the whole production plant.

Furthermore, it is possible to determine an operational status of each of the production devices in accordance with an amount of electric power consumed by the each of the production devices and timely control, depending on a result of such determination, an actual operating state of the whole production plant 100. This allows a great energy-saving effect to be achieved.

The present embodiment is arranged such that, while association between hub devices provided in the respective plurality of production lines are sequentially expanded, energy-saving control is carried out with respect to each of the production devices constituting each of the plurality of production lines. This causes a limitation not to be imposed on a range of production devices to be controlled. It is therefore possible to easily establish an energy-saving control system, even in a case where a production plant includes a large number of production lines.

Moreover, it is possible to handle each of the plurality of production lines as a control element (small group) made up a hub device and other production devices. This makes it possible to easily design energy-saving control system merely by changing a definition of association between the plurality of production lines and/or between the production devices provided in each of the plurality of production lines, even in a case where rearrangement of the plurality of production lines is necessitated due to addition or removal of a production line or due to a change in production planning. That is, it is possible to easily and flexibly change a production device to be controlled or contents of control, depending on an actual operating state such as progress of production and a change in production planning.

Moreover, it is possible to easily understand association between the plurality of production lines. This makes it possible to easily understand, for example, a difference in production takt between production lines or an effect on other production lines while a production line is delayed in operation or stopped, and possible to simplify system design.

Note that the present embodiment has described such a configuration that each of the production devices includes a control section (control section 102 or 202) which controls operation of the each of the production devices depending on operational statuses or a combination of operational statuses of the other ones of the production devices. However, the present embodiment is not limited to such. The present embodiment can be alternatively arranged such that (i) a control device (not illustrated) is provided which controls operation of all or ones of the production devices, provided in the production plant 100, as control-target production devices and (ii) the control device controls operation of the control-target production devices depending on operational statuses or a combination of operational status of devices associated with the control-target production devices. That is, functions of control sections provided in all or ones of the production devices can be carried out by a single control device. The control device can be provided in any one of the production devices. Alternatively, the control device can be provided separately from the production devices.

With this arrangement, operational information, generated in accordance with an amount of electric power consumed by all (or ones) of the production devices provided in the production plant 100 or in accordance with information indicative of the amount of the electric power, is supplied to the control device. This allows an amount of electric power consumed by the whole production plant 100 to be easily understood, and allows an effect of a reduction in electric power consumption (or an energy-saving effect) to be easily verified.

Note also that, in the present embodiment, each hub device (i) transmits, to each of hub devices provided in respective associated lines, operational information on the each hub device which information is generated in accordance with an amount of electric power consumed by the each hub device and (ii) receives, from the each of the hub devices, operational information on the each of the hub devices which information is generated in accordance with an amount of electric power consumed by the each of the hub devices. However, the present embodiment is not limited to such. For example, the present embodiment can be alternatively arranged such that each hub device transmits information indicative of an amount of electric power consumed by the each hub device (a detection value of electric power consumption or an integrated value of electric power consumption). In a case where each hub device transmits information indicative of an amount of electric power consumed by the each hub device, a hub device which receives the information can detect an operational status of the each hub device, provided in an associated line, by making calculation with the use of the information (for example, by comparing, with a threshold, electric power consumption or an integrated value of electric power consumption).

Note also that, in the present embodiment, each of the production lines 1 and 2 individually obtains operational information supplied from the production line 3 and operational information supplied from the production line 4. However, the present embodiment is not limited to such. The present embodiment can be alternatively arranged such that, for example, each of the production lines 1 and 2 (i) receives information indicative of a total amount of electric power consumed by the hub devices provided in the respective production lines 3 and 4 and (ii) determines, depending on the total amount, operational statuses of the production lines 3 and 4 (whether both of the production lines 3 and 4 are in operation, whether only one of the production lines 3 and 4 is in operation, or whether both of the production lines 3 and 4 are stopped). By thus detecting operational statuses (a combination of operational statuses) of associated lines with the use of a total amount of electric power consumed by the associated lines, it is possible to simplify a process of detecting the operational statuses of the associated lines, even in a case where the number of the associated lines is large.

Note also that, in the present embodiment, the resin drying device (shared device) 61 is provided which supplies a resin pellet to each of the injection molding device (associated device) 31 provided in the production line 3 and the injection molding device (associated device) 41 provided in the production line 4. This resin drying device 61 is arranged to exchange operational information with the injection molding devices 31 and 41 and to stop its operation in a case where the injection molding devices 31 and 41 are stopped.

In general, such a shared device that is shared by a plurality of associated devices cannot control its operation depending on only an amount of electric power consumed by one of the plurality of associated devices (or depending on only an operational status of one of the plurality of associated devices). However, in the present embodiment, the shared device is capable of controlling its operation by controlling its operation depending on the combination of the operational statuses of the plurality of associated devices.

Note that the shared device is not limited the resin drying device 61. Alternatively, a compressed air supplying device, an exhaust device, an air conditioner, a lighting device, a cooling water pump, a nitrogen gas supplying device, or the like can be, for example, set as a shared device.

Each of these shared devices can control its operational status depending on operational statuses of associated devices which are associated with the each of the shared devices, by setting, to the each of the shared devices, a control method which varies depending on a combination of the operational statuses (or electric power consumption) of the associated devices.

For example, in a case where an exhaust device which exhausts, outside of the production plant 100, air surrounding or exhausted from each of the production devices provided in the production plant 100 is set as a shared device, the exhaust device can stop its operation (or turned off itself) when all of associated devices which are associated with the exhaust device are stopped. Alternatively, when part of the associated devices, which are associated with the exhaust device, is stopped, the exhaust device can stop part of its operation which part corresponds to the part of the associated devices. Note that, in a case where the exhaust device stops merely part of its operation which part corresponds to the part of the associated devices, this may cause an adversely effect on an entire exhaust system. That is, an exhaust state may become unstable or exhaust efficiency may be decreased, thereby rather causing an increase in electric power consumption. In such cases, the exhaust device preferably stops its operation when all of the associated devices, which are associated with the exhaust device, are stopped.

In a case where a compressed air supplying device, which supplies compressed air to each of the production devices provided in the production plant 100, is set as a shared device, the compressed air supplying device can be configured as follows. That is, when part of associated devices which are associated with the compressed air supplying device is stopped, the compressed air supplying device stops supplying compressed air to the part of the associated devices (or associated devices which are associated in advance with the part of the associated device), while continuing to supply compressed air to the other of the associated devices. This causes unnecessary supply of compressed air to be stopped. It is therefore possible to reduce a load on a compressor and possible to achieve energy saving. The supply of compressed air to the part of the associated devices can be stopped by, for example, (i) providing supply blocking means, such as a solenoid valve, in a passage through which compressed air is supplied to the part of the associated devices and (ii) control device (not illustrated), provided in the compressed air supplying device, controlling the supply blocking means depending on a combination of operational statuses of the associated devices.

In a case where a shared device is associated with a plurality of associated devices like above, the plurality of associated devices can belong to respective different production lines. That is, the present embodiment is arranged such that a small group of production devices, which have direct association therebetween, serves as a production line and operation of the production line is controlled depending on a combination of operational statuses of production lines associated with the production line. Alternatively, the present embodiment can be arranged such that, separately from a definition of a production line, a second small group is defined which is constituted by a shared device and associated devices associated with the shared device and operation of the shared device is controlled depending on a combination of operational statuses of the associated devices. This makes it possible to control operation of a production line depending on a combination of operational statuses of associated production lines and to properly control, depending on the combination of the operational statuses of the associated devices, operation of a shared device which affects the associated devices that are scattered in a plurality of production lines.

Note that the present embodiment has described a case where the present invention is applied to a production plant constituted by a plurality of production lines each including a plurality of production devices. However, the present embodiment is not limited to such a case. That is, the present invention is applicable to various types of plants (facilities, equipment) which include a plurality of device groups each made up of a plurality of devices.

Furthermore, the control section (control device) of each hub device of the present embodiment can be a control device for controlling operation of a control-target device group which is one of a plurality of device groups each made up of a plurality of devices, including: an operational information obtaining section which obtains, from each of associated device groups, operational information indicative of an operational status of the each of the associated device groups, the associated device groups being ones of the plurality of device groups which ones are associated in advance with the control-target device group; a storing section in which stored are (i) first control setting information specifying, depending on the operational status of the each of the associated device groups, contents of control carried out with respect to a representative device which is a predetermined one of the plurality of devices provided in the control-target device group and (ii) second setting information specifying, depending on an operational status of the representative device, contents of control carried out with respect to ones of the plurality of devices provided in the control-target device group which ones are other than the representative device; an operation control section which (a) controls operation of the representative device in accordance with (i) the operational information on the each of the associated device groups, which information has been obtained by the operational information obtaining section, and (ii) the first control setting information and (b) controls, in accordance with the operational status of the representative device and the second setting information, operation of the ones of the plurality of devices provided in the control-target device group which ones are other than the representative device.

Note also that the present embodiment has described a configuration in which a hub device provided in a control-target line controls operation of the hub device and a subordinate device(s) depending on a combination of operational statuses of a plurality of associated lines. However, the present embodiment is not always limited to such a configuration. For example, the present embodiment can be alternatively arranged such that the hub device controls operation of the hub device and the subordinate device(s) depending on an operational status of a single associated line.

Note also that operational information on an associated device group can be information indicative of an operational status of a representative device provided in the associated device group, the representative device being a predetermined one of devices provided in the associated device group.

According to the above configuration, in a case where an operational status of any one of associated device groups is changed, it is possible to control, depending on a combination of operational statuses of the associated device groups, operation of a representative device provided in a control-target device group. Furthermore, it is possible to control, depending on a change in operational status of the representative device, operation of the other devices, than the representative device, provided in the control-target device group. This makes it possible to easily control operation of each of devices (the representative device and the other devices than the representative device) provided in the control-target device group, in a case where a change occurs in operational status of any one of the associated device groups. Further, it is possible to handle each device group as a control element made up of a representative device and the other devices. Therefore, even in a case where rearrangement of device groups occurs due to addition or removal of a device group or due to a change in production planning, it is possible to easily design a system merely by changing a definition of association between device groups (first control setting information) or a definition of association between devices provided in a device group (second control setting information), and possible to easily and flexibly change a device to be controlled or contents of control.

Further, the control section is arranged such that: in the storing section, third setting information is stored which specifies, , depending on operational statuses of the ones of the plurality of devices provided in the control-target device group which ones are other than the representative device, contents of control carried out with respect to the representative device; the operation control section controls operation of the representative device in accordance with (i) information which indicates an operational status of each of the plurality of devices provided in the control-target device group and which is received from the each of the plurality of devices and (ii) the third setting information; the operation control section controls operation of the ones, other than the representative device, of the plurality of devices provided in the control-target device group, in accordance with an operational status of the representative device and the second setting information; and the operational control section further includes: an operational information generating section which generates operational information indicative of the operational status of the representative device; and an operational information supplying section which supplies, to each of the associated device groups, the operational information which the operational information generating section has generated.

According to the above configuration, it is possible to control operation of a representative device and the other devices, than the representative device, provided in a control-target device group, depending on a change in operational status of any one of devices provided in the control-target device group. Furthermore, it is possible to cause each of associated device groups to carry out control reflecting an operational status of the control-target device group, by supplying, to the each of the associated device groups, operational information indicative of an operational status of the representative device provided in the control-target device group. Therefore, in a case where a change occurs in operational status of any one of devices provided in a plant, it is possible to (i) control, depending on the change, operation of a representative device provided in a device group to which the any one of the devices belongs, (ii) control, depending on operation of the representative device, operation of the other devices provided in the device group, and (iii) control, depending on operation of the representative device, operation of associated devices associated with the device group. As such, in a case where a change occurs in operational status of any one of the devices provided in the plant, it is possible to sequentially change, depending on the change, operational statuses of devices which are directly or indirectly associated with the any one of the devices. This allows energy saving to be realized in the whole plant.

### (1-5. Software Implementation Example)

Finally, each block of the aforementioned hub device and/or subordinate device (especially, the control section 102 and the control section 202) can be implemented by hardware such as a logic circuit provided on an integrated circuit (IC chip) or can alternatively be implemented by software with the use of a CPU (Central Processing Unit).

In the latter case, the hub device and/or the subordinate device includes: a CPU which executes instructions of a program that carries out the foregoing functions; and a storage device (recording medium) such as a ROM (Read Only Memory) which stores the program, a RAM (Random Access Memory) in which the program is loaded, and a memory which stores the program and various sets of data. The object of the present invention can be attained by (i) supplying, to the hub device and/or subordinate device, the recoding medium in which program codes (an executable program, an intermediate code program, and a source program) of a program for controlling the hub device and/or subordinate device, each of which is implemented by software that executes the foregoing functions, are computer-readably recorded and (ii) causing a computer (or a CPU or an MPU) of the hub device and/or subordinate device to read and execute the program codes recorded in the recording medium.

Examples of the recording medium includes a non-transitory tangible medium, i.e., (i) tapes such as a magnetic tape and a cassette tape; (ii) disks including magnetic disks, such as a floppy (Registered Trademark) disk and a hard disk, and optical disks, such as a CD-ROM, an MO, an MD, a DVD, and a CD-R; (iii) cards such as an IC card (including a memory card) and an optical card; (iv) semiconductor memories such as a mask ROM, EPROM, EEPROM (Registered Trademark), and a flash ROM; and (v) logic circuits such as a PLD (Programmable Logic Device) and an FPGA (Field Programmable Gate Array).

The hub device and/or subordinate device can be connected to a communication network so that the program codes are supplied to the hub device and/or subordinate device via the communication network. This communication network is not limited to any particular one, provided that the program codes can be transmitted. Examples of the communication network include the Internet, an intranet, an extranet, a LAN, ISDN, VAN, a CATV communications network, a virtual private network, a telephone network, a mobile telecommunications network, and a satellite communication network. Further, a transmission medium by which the communication network is constituted is not limited to any particular one, provided that the program codes can be transmitted. Examples of the transmission medium include: wired transmission media such as IEEE1394, a USB, a power-line carrier, a cable TV circuit, a telephone line, and ADSL (Asymmetric Digital Subscriber Line); and wireless transmission media such as infrared communication systems such as IrDA and a remote control, Bluetooth (Registered Trademark), IEEE802.11 wireless communication system, HDR (High Digital Rate), NFC (Near Field Communication), DLNA (Digital Living Network Alliance), a mobile phone network, a satellite circuit, and a digital terrestrial network. Note that the present invention can also be implemented in a form of a computer data signal in which the program codes are embodied by an electronic transmission and which is embedded in carrier waves.

### (1-6. Summary)

A control device in accordance with an embodiment of the present invention is a control device for controlling operation of a control-target device group which is one of a plurality of device groups each made up of a plurality of devices, including: an operational information obtaining section which obtains, from each of associated device groups, operational information indicative of an operational statuses of the each of the associated device groups, the associated device groups being device groups associated in advance with a control-target device group among a plurality of device groups; a storing section in which first control setting information is stored, the first control setting information specifying, for each combination of operational statuses of the associated device groups, contents of control carried out with respect to the control-target device group; and an operation control section which controls operation of the control-target device group in accordance with (i) the operational information on the each of the associated device groups, which operational information has been obtained by the operational information obtaining section, and (ii) the first control setting information stored in the storing section.

According to the above configuration, it is possible to control operation of a control-target device group depending on a combination of operational statuses of associated device groups, even in a case where the control-target device group is affected by the operational statuses of the associated device groups. This makes it possible to effectively reduce energy consumed by a plant constituted by a plurality of device groups.

Note that the control device can be arranged such that the operational information is information indicating whether the each of the associated device groups, which corresponds to the operational information, is in an operating state or a stopped state. For example, the information indicating whether the each of the associated device groups is in an operating state or a stopped state can be information indicating whether the each of the associated device groups is turned on or off.

According to the above configuration, it is possible to obtain, from each of associated device groups, operational information indicating whether the each of the associated device groups is in an operating state or a stopped state, and possible to control operation of a control-target device group depending on a combination of operational statuses of the associated device groups.

Further, the control device can be arranged such that the operational information is any one of (1) information indicating whether a representative device, which is a predetermined one of devices provided in the each of the associated device groups that corresponds to the operational information, is in an operating sate or a stopped state, (2) information indicative of an amount of electric power consumed by the representative device, (3) information indicative of a total amount of electric power consumed by the each of the associated device groups that corresponds to the operational information, and (4) information indicative of a total amount of electric power consumed by the representative device provided in the each of the associated device groups that corresponds to the operational information.

According to the above configuration, an operational status of each of associated device groups is determined depending on (1) information indicating whether a representative device, which is a predetermined one of a plurality of devices provided in the each of the associated device groups that corresponds to the operational information, is in an operating sate or a stopped state, (2) information indicative of an amount of electric power consumed by the representative device, (3) information indicative of a total amount of electric power consumed by the each of the associated device groups, or (4) information indicative of a total amount of electric power consumed by the representative device, and operation of the control-target device group is controlled depending on a combination of operational statuses of the associated device groups.

Further, the control device can be arranged such that: the control-target device group supplies, to the each of the associated device groups, an object which the control-target device group has processed; the first control setting information is set such that, as the number of operating ones of the associated device groups, each of which processes the object supplied from the control-target device group, becomes smaller, the number of objects processed per given time by the control-target device group becomes smaller.

According to the above configuration, it is possible to control the number of objects processed per given time by a control-target device group, depending on the number of associated device groups to which the objects are supplied. This allows a reduction in load on the control-target device group and, accordingly, allows energy saving to be realized. Furthermore, it is possible to prevent the control-target device group from having an excess throughput and therefore having stocks, in a case where part of the associated device groups is in a non-operating state. Moreover, it is possible to prevent each of the associated device groups from having standby time, in a case where the number of the associated device groups in an operating state is increased and, consequently, the control-target device group has an insufficient throughput.

Further, the control device can be arranged such that: the control-target device group produces a product with the use of different objects supplied from the respective associated device groups; and the first control setting information is set such that, in a case where any one of the associated device groups is in a stopped state, operation of the control-target device group is switched to a stopped state.

In a case where any one of associated device groups is in a stopped state, a control-target device group, which produces a product with the use of different objects supplied from the respective associated device groups, cannot produce a product. According to the above configuration, in a case where any one of the associated device groups is in a stopped state, it is possible to switch operation of the control-target device group to a stopped state. This allows energy, consumed due to unnecessary operation of the control-target device group, to be suppressed and, accordingly, allows energy saving to be realized. Furthermore, in a case where the control-target device group cannot produce a product, it is possible to stop the control-target device group. It is therefore possible to prevent objects, supplied from part of the associated device groups, from being stored in the control-target device group and, accordingly, possible to prevent the control-target device group from having excess stocks.

Further, the control device can be arranged such that: the control-target device group carries out a common process with respect to an identical object supplied from each of the associated device groups; the first control setting information is set such that, as the number of operating ones of the associated device groups, each of which supplies the identical object to the control-target device group, becomes smaller, the number of objects processed per given time by the control-target device group becomes smaller.

According to the above configuration, it is possible to control the number of objects processed per given time by a control-target device group, depending on the number of associated device groups from which the objects are supplied. This allows a load of the control-target device group to be properly controlled depending on the number of objects supplied from the associated device groups. It is therefore possible to realize energy saving.

Further, the control device can be arranged such that: the first control setting information specifying, for the each combination of the operational statuses of the associated device groups, contents of control carried out with respect to a representative device which is a predetermined one of devices provided in the control-target device group; in the storing section, second setting information is stored which specifies, depending on an operational status of the representative device provided in the control-target device group, contents of control carried out with respect to the other one, than the representative device, of the devices provided in the control-target device group; the operation control section controls operation of the representative device provided in the control-target device group, in accordance with (i) the operational information on the each of the associated device groups which operational information has been obtained by the operational information obtaining section and (ii) the first control setting information; and the operation control section controls operation of the other one, than the representative device, of the devices provided in the control-target device group, in accordance with the operational status of the representative device and the second setting information.

According to the above configuration, in a case where a change occurs in operational status of any one of associated device groups, it is possible to control, depending on a combination of operational statuses of the associated device groups, operation of a representative device provided in a control-target device group. Furthermore, it is possible to control operation of the other devices, than the representative device, provided in the control-target device group, depending on a change in operational status of the representative device. This makes it possible to easily control operation of each of the devices (the representative device and the other devices than the representative device) provided in the control-target device group, in a case where a change occurs in operational status of any one of the associated devices. Moreover, it is possible to handle each device group as a control element made up of a representative device and the other devices. Therefore, even in a case where rearrangement of device groups occurs due to addition or removal of a device group or due to a change in production planning, it is possible to easily design a system merely by changing a definition of association between device groups (first control setting information) or a definition of association between devices provided in a device group (second control setting information), and possible to easily and flexibly change a device to be controlled or contents of control.

Further, the control device can be arranged such that: in the storing section, second setting information and third setting information are stored, the second setting information specifying, depending on an operational status of a representative device which is a predetermined one of devices provided in the control-target device group, contents of control carried out with respect to the other one, than the representative device, of the devices provided in the control-target device group, the third setting information specifying, depending on an operational status of each of the devices provided in the control-target device group, contents of control carried out with respect to the representative device; the operation control section controls operation of the representative device provided in the control-target device group, in accordance with (i) information which is received from the each of the devices provided in the control-target device group and which indicates an operational status of the each of the devices and (ii) the third setting information; the operation control section controls operation of the other one, than the representative device, of the devices provided in the control-target device group, in accordance with the operational status of the representative device and the second setting information; and the operation control section further includes: an operational information generating section which generates operational information indicative of the operational status of the representative device; and an operational information supplying section which supplies, to the each of the associated device groups, the operational information which has been generated by the operational information supplying section.

According to the above configuration, it is possible to control operation of a representative device and the other devices, than the representative device, provided in a control-target device group, depending on a change in operational status of any one of devices provided in the control-target device group. Furthermore, it is possible to cause each of associated device groups to carry out control reflecting an operational status of the control-target device group, by supplying, to the each of the associated device groups, operational information indicative of an operational status of the representative device provided in the control-target device group. Therefore, in a case where a change occurs in operational status of any one of devices provided in a plant, it is possible to (i) control, depending on the change, operation of a representative device provided in a device group to which the any one of the devices belongs, (ii) control, depending on operation of the representative device, operation of the other devices provided in the device group, and (iii) control, depending on operation of the representative device, operation of associated devices associated with the device group. As such, in a case where a change occurs in operational status of any one of the devices provided in the plant, it is possible to sequentially change, depending on the change, operational statuses of devices which are directly or indirectly associated with the any one of the devices. This allows energy saving to be realized in the whole plant.

A control system in accordance with an embodiment of the present invention is a system for controlling a plant including a plurality of device groups each of which is made up of a plurality of devices, the system including: any one of the foregoing control devices.

According to the above control method, it is possible to control operation of a control-target device group depending on a combination of operational statuses of associated device groups, even in a case where the control-target device group is affected by the operational statuses of the associated device groups. This makes it possible to effectively reduce energy consumed by a plant constituted by a plurality of device groups.

Further, the control system can be arranged to further includes: a shared device which carries out a process associated with devices scattered in a plurality of device groups, the shared device including: an obtaining section which obtains, from each of the devices associated with the process carried out by the shared device, operational information indicative of an operational status of the each of the devices: a setting storing section in which setting information is stored, the setting information specifying, for each combination of operational statuses of the devices, contents of control carried out with respect to operation of the shared device; and a control section which controls operation of the shared device in accordance with (i) the operational information on the each of the devices, which operational information has been obtained by the obtaining section, and (ii) the setting information stored in the setting storing section.

According to the above configuration, it is possible to control operation of a shared device which carries out a process associated with a plurality of devices that are scattered in a plurality of device groups, depending on operational statuses of the plurality of devices associated with the process carried out by the shared device.

A control method in accordance with the present invention is a method for causing a control device to control operation of a control-target device group which is one of a plurality of device groups each made up of a plurality of devices, including the steps of: (a) causing the control device to obtain, from each of associated device groups, operational information indicative of an operational status of the each of the associated device groups, the associated device groups being device groups associated in advance with a control-target device group; and (b) causing the control device to control operation of the control-target device group in accordance with (i) the operational information on the each of the associated device groups, which operational information has been obtained in the step (a), and (ii) first control setting information stored in advance in a storing section, the first control setting information specifying, for each combination of operational statuses of the associated device groups, contents of control carried out with respect to the control-target device group.

According to the above control method, it is possible to control operation of a control-target device group depending on a combination of operational statuses of associated device groups, even in a case where the control-target device group is affected by the operational statuses of the associated device groups. This makes it possible to effectively reduce energy consumed by a plant constituted by a plurality of device groups.

Note that the above control method can be realized by a computer. In this case, the scope of the present invention also encompasses (i) a program for causing the computer to carry out each step of the method and (ii) a computer-readable recording medium in which the program is recorded.

The present invention is not limited to the description of the embodiments, but may be altered by a skilled person in the art within the scope of the claims. An embodiment derived from a proper combination of technical means disclosed in different embodiments is also encompassed in the technical scope of the present invention. Further, a new technical feature can be derived from a combination of technical means disclosed in embodiments.

### Industrial Applicability

The present invention is applicable to a control device and a control method each for controlling a plurality of device groups which constitute a plant and each of which is made up of a plurality of devices. The present invention is also applicable to a control system for controlling the plant.

### Reference Signs List

1 through 5 Production lines (device groups, control-target device groups, associated device groups)
11, 21 Punch press
12, 22 Press (representative device)
31, 41 Injection molding device (representative device)
32, 42 Mold temperature adjusting device
33, 43 Removing device
34, 44 Conveying device
51 Metal plate press fitting device
52 Inspection device (representative device)
53 Stocker
61 Resin drying device (shared device)
100 Production plant
101 Production processing section
102 Control section
111 Electric power detecting section
112 Operational information generating section
113 Operational information obtaining section
114 Operation control section
115 Storing section
201 Production processing section
202 Control section
211 Electric power detecting section
212 Electric power information output section
213 Control information obtaining section
214 Operation control section

## Claims

1. A control device (102) adapted to control operation of a control-target device group out of a plurality of device groups each of the plurality of device groups making up a production line (1,...,5) of a production plant, wherein
each of the plurality of device groups is composed of a plurality of devices which are configured to process a workpiece being an object to be processed, and which are closely associated with each other in operation,
each of the plurality of production lines (1,...,5) includes one device of the plurality of devices set, in advance, as a corresponding representative device (12, 22, 31, 41, 52), the representative device being (a) closely associated, in terms of operation, with other devices of the device group making up the production line in which the representative device is provided, and (b) carrying out a major process in the production line in which the representative device is provided, and
the representative device of the control-target device group is configured to obtain operational information from representative devices of associated device groups,
said control device (102) comprising:
an operational information obtaining section (113) which is adapted to obtain, from each of the associated device groups, the operational information indicative of an operational status of the each of the associated device groups, the associated device groups being device groups associated in advance with the control-target device group among the plurality of device groups;
a storing section (115) storing first control setting information, the first control setting information specifying, for each combination of operational statuses of the associated device groups, contents of control carried out with respect to the control-target device group; and
an operation control section (114) adapted to control operation of the control-target device group in accordance with (i) the operational information on the each of the associated device groups, which operational information has been obtained by the operational information obtaining section (113), and (ii) the first control setting information stored in the storing section (115),
wherein:
(i) the operational information is any one of (1) information indicating whether the representative device, which is a predetermined one of devices provided in the each of the associated device groups that corresponds to the operational information, is in an operating state or a stopped state, (2) information indicative of an amount of electric power consumed by the representative device provided in the each of the associated device groups, (3) information indicative of a total amount of electric power consumed by the each of the associated device groups that corresponds to the operational information, and (4) information indicative of a total amount of electric power consumed by the representative device provided in the each of the associated device groups that corresponds to the operational information;
(ii) the storing section (115) stores second setting information and third setting information,
the second setting information specifying, depending on an operational status of the representative device which is the predetermined device set in advance and provided in the control-target device group, contents of control carried out with respect to the other one, than the representative device, of the devices provided in the control-target device group, and
the third setting information specifying, depending on an operational status of each of the devices provided in the control-target device group, contents of control carried out with respect to the representative device of the control target group.

2. The control device as set forth in claim 1, wherein:
the control-target device group is adapted to supply, to the each of the associated device groups, an object which the control-target device group has processed;
the first control setting information is set such that, as the number of operating ones of the associated device groups, each of which processes the object supplied from the control-target device group, becomes smaller, the number of objects processed per given time by the control-target device group becomes smaller.

3. The control device as set forth in claim 1, wherein:
the control-target device group is adapted to produce a product with the use of different objects supplied from the respective associated device groups; and
the first control setting information is set such that, in a case where any one of the associated device groups is in a stopped state, operation of the control-target device group is switched to a stopped state.

4. The control device as set forth in claim 1, wherein:
the control-target device group is adapted to carry out a common process with respect to an identical object supplied from each of the associated device groups;
the first control setting information is set such that, as the number of operating ones of the associated device groups, each of which supplies the identical object to the control-target device group, becomes smaller, the number of objects processed per given time by the control-target device group becomes smaller.

5. The control device as set forth in any one of claims 1 through 4, wherein:
the first control setting information specifying, for the each combination of the operational statuses of the associated device groups, contents of control carried out with respect to a representative device which is a predetermined one of devices provided in the control-target device group;
the operation control section (114) controls operation of the representative device provided in the control-target device group, in accordance with (i) the operational information on the each of the associated device groups which operational information has been obtained by the operational information obtaining section (113) and (ii) the first control setting information; and
the operation control section (114, 214) is adapted to control operation of the other one, than the representative device, of the devices provided in the control-target device group, in accordance with the operational status of the representative device and the second setting information.

6. The control device as set forth in any one of claims 1 through 5, wherein:
the operation control section (114, 214) is adapted to control operation of the representative device provided in the control-target device group, in accordance with (i) information which is received from the each of the devices provided in the control-target device group and which indicates an operational status of the each of the devices and (ii) the third setting information;
the operation control section (114, 214) is adapted to control operation of the other one, than the representative device, of the devices provided in the control-target device group, in accordance with the operational status of the representative device and the second setting information; and
the control device (102) further includes: an operational information generating section (112) which is adapted to generate operational information indicative of the operational status of the representative device; and an operational information supplying section which is adapted to supply, to the each of the associated device groups, the operational information which has been generated by the operational information generating section (112).

7. A system for controlling a plant including a plurality of device groups each of which is made up of a plurality of devices, the system comprising:
a control device recited in any one of claims 1 through 6.

8. A system as set forth in claim 7, further comprising:
a shared device (61) which is adapted to carry out a process associated with devices scattered in a plurality of device groups,
the shared device (61) including:
an obtaining section which is adapted to obtain, from each of the devices associated with the process carried out by the shared device (61), operational information indicative of an operational status of the each of the devices:
a setting storing section in which setting information is stored, the setting information specifying, for each combination of operational statuses of the devices, contents of control carried out with respect to operation of the shared device (61); and
a control section (102, 202) which is adapted to control operation of the shared device in accordance with (i) the operational information on the each of the devices, which operational information has been obtained by the obtaining section, and (ii) the setting information stored in the setting storing section.

9. A method for causing a control device to control operation of a control-target device group out of a plurality of device groups each of the plurality of device groups making up a production line (1,...,5) of a production plant, wherein
each of the plurality of device groups is composed of a plurality of devices which are configured to process a workpiece being an object to be processed, and which are closely associated with each other in operation,
each of the plurality of production lines (1,...,5) includes one device of the plurality of devices set, in advance, as a corresponding representative device (12, 22, 31, 41, 52), the representative device being (a) closely associated, in terms of operation, with other devices of the device group making up the production line in which the representative device is provided, and (b) carrying out a major process in the production line in which the representative device is provided, and
the representative device of the control-target device group is configured to obtain operational information from representative devices of associated device groups,
said method, comprising the steps of:
(a) causing the control device to obtain, from each of the associated device groups, operational information indicative of an operational status of the each of the associated device groups, the associated device groups being device groups associated in advance with the control-target device group; and
(b) causing the control device to control operation of the control-target device group in accordance with (i) the operational information on the each of the associated device groups, which operational information has been obtained in the step (a), and (ii) first control setting information stored in advance in a storing section (115), the first control setting information specifying, for each combination of operational statuses of the associated device groups, contents of control carried out with respect to the control-target device group, wherein:
(i) the operational information is any one of (1) information indicating whether the representative device, which is a predetermined one of devices provided in the each of the associated device groups that corresponds to the operational information, is in an operating state or a stopped state, (2) information indicative of an amount of electric power consumed by the representative device provided in the each of the associated device groups, (3) information indicative of a total amount of electric power consumed by the each of the associated device groups that corresponds to the operational information, and (4) information indicative of a total amount of electric power consumed by the representative device provided in the each of the associated device groups that corresponds to the operational information;
(ii) the storing section (115) stores second setting information and third setting information,
the second setting information specifying, depending on an operational status of the representative device which is the predetermined device set in advance and provided in the control-target device group, contents of control carried out with respect to the other one, than the representative device, of the devices provided in the control-target device group,
the third setting information specifying, depending on an operational status of each of the devices provided in the control-target device group, contents of control carried out with respect to the representative device of the control target group.

10. A program for causing a computer to carry out steps recited in claim 9.

11. A computer-readable recording medium in which a program recited in claims 10 is recorded.

## Patentansprüche

1. Steuervorrichtung (102), die ausgelegt ist, um einen Betrieb einer Steuerziel-Vorrichtungsgruppe aus mehreren Vorrichtungsgruppen zu steuern, wobei jede der mehreren Vorrichtungsgruppen eine Fertigungslinie (1, ..., 5) einer Produktionsanlage bildet, wobei
jede der mehreren Vorrichtungsgruppen aus mehreren Vorrichtungen aufgebaut ist, die konfiguriert sind, um ein Werkstück, das ein zu verarbeitender Gegenstand ist, zu verarbeiten, und die in einem Betrieb stark miteinander in Beziehung stehen,
jede der mehreren Fertigungslinien (1, ..., 5) eine Vorrichtung der mehreren Vorrichtungen aufweist, die im Voraus als eine entsprechende repräsentative Vorrichtung (12, 22, 31, 41, 52) eingestellt wurde, wobei die repräsentative Vorrichtung (a) bei einem Betrieb mit anderen Vorrichtungen der Vorrichtungsgruppe, die die Fertigungslinie bilden, in der die repräsentative Vorrichtung bereitgestellt ist, stark in Beziehung steht und (b) einen Hauptvorgang in der Fertigungslinie, in dem die repräsentative Vorrichtung bereitgestellt ist, ausführt, und
die repräsentative Vorrichtung der Steuerziel-Vorrichtungsgruppe konfiguriert ist, um Betriebsinformationen von repräsentativen Vorrichtungen von zugeordneten Vorrichtungsgruppen zu erhalten,
die Steuervorrichtung (102) Folgendes umfasst:
einen Betriebsinformationen erhaltenden Abschnitt (113), der ausgelegt ist, um von jeder der zugeordneten Vorrichtungsgruppen die Betriebsinformationen zu erhalten, die einen Betriebsstatus jeder der zugeordneten Vorrichtungsgruppen angeben, wobei die zugeordneten Vorrichtungsgruppen Vorrichtungsgruppen sind, welche der Steuerziel-Vorrichtungsgruppe aus den mehreren Vorrichtungsgruppen im Voraus zugeordnet wurden;
einen Speicherabschnitt (115), der erste Steuereinstellinformationen speichert, wobei die ersten Steuereinstellinformationen für jede Kombination aus Betriebsstatus der zugeordneten Vorrichtungsgruppen Steuerinhalte spezifizieren, die in Bezug auf die Steuerziel-Vorrichtungsgruppe ausgeführt werden; und
einen Betriebssteuerabschnitt (114), der ausgelegt ist, um einen Betrieb der Steuerziel-Vorrichtungsgruppe gemäß (i) den Betriebsinformationen über jede der zugeordneten Vorrichtungsgruppen, wobei die Betriebsinformationen durch den Betriebsinformationen erhaltenden Abschnitt (113) erhalten wurden, und (ii) den ersten Steuereinstellinformationen, die in dem Speicherabschnitt (115) gespeichert sind, zu steuern,
wobei:
(i) die Betriebsinformationen eines von (1) Informationen, die angeben, ob die repräsentative Vorrichtung, welche eine vorbestimmte von Vorrichtungen ist, die in jeder der zugeordneten Vorrichtungsgruppen bereitgestellt ist, die den Betriebsinformationen entspricht, sich in einem Betriebszustand oder einem angehaltenen Zustand befindet, (2) Informationen, die einen Betrag elektrischer Leistung angeben, der durch die repräsentative Vorrichtung verbraucht wird, die in jeder der zugeordneten Vorrichtungsgruppen bereitgestellt ist, (3) Informationen, die einen Gesamtbetrag elektrischer Leistung angeben, der durch jede der zugeordneten Vorrichtungsgruppen verbraucht wird, die den Betriebsinformationen entspricht, und (4) Informationen, die einen Gesamtbetrag elektrischer Leistung angeben, der durch die repräsentative Vorrichtung verbraucht wird, die in jeder der zugeordneten Vorrichtungsgruppen bereitgestellt ist, die den Betriebsinformationen entspricht, sind;
(ii) der Speicherabschnitt (115) zweite Einstellinformationen und dritte Einstellinformationen speichert,
wobei die zweiten Einstellinformationen in Abhängigkeit von einem Betriebsstatus der repräsentativen Vorrichtung, welche die vorbestimmte Vorrichtung ist, die im Voraus eingestellt wurde und in der Steuerziel-Vorrichtungsgruppe bereitgestellt ist, Steuerinhalte, die in Bezug auf die andere, nicht die repräsentative Vorrichtung, der Vorrichtungen, die in der Steuerziel-Vorrichtungsgruppe bereitgestellt ist, ausgeführt werden, spezifizieren und
wobei die dritten Einstellinformationen in Abhängigkeit von einem Betriebsstatus jeder der Vorrichtungen, die in der Steuerziel-Vorrichtungsgruppe bereitgestellt sind, Steuerinhalte, die in Bezug auf die repräsentative Vorrichtung der Steuerziel-Gruppe ausgeführt werden, spezifizieren.

2. Steuervorrichtung nach Anspruch 1, wobei:
die Steuerziel-Vorrichtungsgruppe ausgelegt ist, um jeder von den zugeordneten Vorrichtungsgruppen einen Gegenstand zuzuführen, den die Steuerziel-Vorrichtungsgruppe verarbeitet hat;
die ersten Steuereinstellinformationen derart eingestellt sind, dass bei abnehmender Zahl von sich in Betrieb befindenden der zugeordneten Vorrichtungsgruppen, von denen jede den Gegenstand, der von der Steuerziel-Vorrichtungsgruppe zugeführt wird, verarbeitet, die Zahl von Gegenständen, die pro angegebener Zeit durch die Steuerziel-Vorrichtungsgruppe verarbeitetet werden, abnimmt.

3. Steuervorrichtung nach Anspruch 1, wobei:
die Steuerziel-Vorrichtungsgruppe ausgelegt ist, um unter Verwendung unterschiedlicher Gegenstände, die von den jeweiligen zugeordneten Vorrichtungsgruppen zugeführt werden, ein Produkt zu erzeugen; und
die ersten Steuereinstellinformationen derart eingestellt sind, dass in einem Fall, in dem sich eine beliebige der zugeordneten Vorrichtungsgruppen in einem angehaltenen Zustand befindet, ein Betrieb der Steuerziel-Vorrichtungsgruppe in einen angehaltenen Zustand umgeschaltet wird.

4. Steuervorrichtung nach Anspruch 1, wobei:
die Steuerziel-Vorrichtungsgruppe ausgelegt ist, um einen gemeinsamen Vorgang in Bezug auf einen identischen Gegenstand, der von jeder der zugeordneten Vorrichtungsgruppen zugeführt wird, auszuführen;
die ersten Steuereinstellinformationen derart eingestellt sind, dass bei abnehmender Zahl von sich in Betrieb befindenden der zugeordneten Vorrichtungsgruppen, von denen jede den identischen Gegenstand zu der Steuerziel-Vorrichtungsgruppe zuführt, die Zahl von Gegenständen, die pro angegebener Zeit durch die Steuerziel-Vorrichtungsgruppe verarbeitetet werden, abnimmt.

5. Steuervorrichtung nach einem der Ansprüche 1 bis 4, wobei:
die ersten Steuereinstellinformationen für jede Kombination aus den Betriebsstatus der zugeordneten Vorrichtungsgruppen Steuerinhalte spezifizieren, die in Bezug auf eine repräsentative Vorrichtung ausgeführt werden, welche eine vorbestimmte von Vorrichtungen ist, die in der Steuerziel-Vorrichtungsgruppe bereitgestellt sind;
der Betriebssteuerabschnitt (114) einen Betrieb der repräsentativen Vorrichtung, die in der Steuerziel-Vorrichtungsgruppe bereitgestellt ist, gemäß (i) den Betriebsinformationen für jede der zugeordneten Vorrichtungsgruppen, für die Betriebsinformationen durch den Betriebsinformationen erhaltenden Abschnitt (113) erhalten wurden, und (ii) den ersten Steuereinstellinformationen steuert; und
der Betriebssteuerabschnitt (114, 214) ausgelegt ist, um einen Betrieb der anderen, nicht der repräsentativen Vorrichtung, der Vorrichtungen, die in der Steuerziel-Vorrichtungsgruppe bereitgestellt ist, gemäß dem Betriebsstatus der repräsentativen Vorrichtung und den zweiten Einstellinformationen zu steuern.

6. Steuervorrichtung nach einem der Ansprüche 1 bis 5, wobei:
der Betriebssteuerabschnitt (114, 214) ausgelegt ist, um einen Betrieb der repräsentativen Vorrichtung, die in der Steuerziel-Vorrichtungsgruppe bereitgestellt ist, gemäß (i) Informationen, die von jeder der Vorrichtungen, die in der Steuerziel-Vorrichtungsgruppe bereitgestellt sind, empfangen werden und die einen Betriebsstatus jeder der Vorrichtungen angeben, und (ii) den dritten Einstellinformationen zu steuern;
der Betriebssteuerabschnitt (114, 214) ausgelegt ist, um einen Betrieb der anderen, nicht der repräsentativen Vorrichtung, der Vorrichtungen, die in der Steuerziel-Vorrichtungsgruppe bereitgestellt ist, gemäß dem Betriebsstatus der repräsentativen Vorrichtung und den zweiten Einstellinformationen zu steuern; und
die Steuervorrichtung (102) ferner Folgendes aufweist: einen Betriebsinformationen erzeugenden Abschnitt (112), der ausgelegt ist, um Betriebsinformationen zu erzeugen, die den Betriebsstatus der repräsentativen Vorrichtung angeben; und einen Betriebsinformationen zuführenden Abschnitt, der ausgelegt ist, um zu jeder der zugeordneten Vorrichtungsgruppen die Betriebsinformationen zuzuführen, die durch den Betriebsinformationen erzeugenden Abschnitt (112) erzeugt wurden.

7. System zum Steuern einer Anlage, die mehrere Vorrichtungsgruppen aufweist, von denen jede aus mehreren Vorrichtungen gebildet ist, wobei das System Folgendes umfasst:
eine Steuervorrichtung nach einem der Ansprüche 1 bis 6.

8. System nach Anspruch 7, ferner umfassend:
eine gemeinsam genutzte Vorrichtung (61), die ausgelegt ist, um einen Vorgang auszuführen, der Vorrichtungen zugeordnet ist, die in mehreren Vorrichtungsgruppen verstreut sind,
wobei die gemeinsam genutzte Vorrichtung (61) Folgendes aufweist:
einen erhaltenden Abschnitt, der ausgelegt ist, um von jeder der Vorrichtungen, die dem Vorgang zugeordnet sind, der durch die gemeinsam genutzte Vorrichtung (61) ausgeführt wird, Betriebsinformationen, die einen Betriebsstatus jeder der Vorrichtungen angeben, zu erhalten;
einen Einstellungsspeicherabschnitt, in dem Einstellinformationen gespeichert sind, wobei die Einstellinformationen für jede Kombination aus Betriebsstatus der Vorrichtungen Steuerinhalte, die in Bezug auf einen Betrieb der gemeinsam genutzten Vorrichtung (61) ausgeführt werden, spezifizieren; und
einen Steuerabschnitt (102, 202), der ausgelegt ist, um einen Betrieb der gemeinsam genutzten Vorrichtung gemäß (i) den Betriebsinformationen für jede der Vorrichtungen, für die Betriebsinformationen durch den erhaltenden Abschnitt erhalten wurden, und (ii) den ersten Einstellinformationen, die in dem Einstellungsspeicherabschnitt gespeichert sind, zu steuern.

9. Verfahren zum Veranlassen einer Steuervorrichtung, einen Betrieb einer Steuerziel-Vorrichtungsgruppe aus mehreren Vorrichtungsgruppen zu steuern, wobei jede der mehreren Vorrichtungsgruppen eine Fertigungslinie (1, ..., 5) einer Produktionsanlage bildet, wobei
jede der mehreren Vorrichtungsgruppen aus mehreren Vorrichtungen aufgebaut ist, die konfiguriert sind, um ein Werkstück, das ein zu verarbeitender Gegenstand ist, zu verarbeiten, und die in einem Betrieb stark miteinander in Beziehung stehen,
jede der mehreren Fertigungslinien (1, ..., 5) eine Vorrichtung der mehreren Vorrichtungen aufweist, die im Voraus als eine entsprechende repräsentative Vorrichtung (12, 22, 31, 41, 52) eingestellt wurde, wobei die repräsentative Vorrichtung (a) bei einem Betrieb mit anderen Vorrichtungen der Vorrichtungsgruppe, die die Fertigungslinie bilden, in der die repräsentative Vorrichtung bereitgestellt ist, stark in Beziehung steht und (b) einen Hauptvorgang in der Fertigungslinie, in dem die repräsentative Vorrichtung bereitgestellt ist, ausführt, und
die repräsentative Vorrichtung der Steuerziel-Vorrichtungsgruppe konfiguriert ist, um Betriebsinformationen von repräsentativen Vorrichtungen von zugeordneten Vorrichtungsgruppen zu erhalten,
das Verfahren die folgenden Schritte umfasst:
(a) Veranlassen der Steuervorrichtung, von jeder der zugeordneten Vorrichtungsgruppen Betriebsinformationen zu erhalten, die einen Betriebsstatus jeder der zugeordneten Vorrichtungsgruppen angeben, wobei die zugeordneten Vorrichtungsgruppen Vorrichtungsgruppen sind, die der Steuerziel-Vorrichtungsgruppe im Voraus zugeordnet wurden; und
(b) Veranlassen der Steuervorrichtung, einen Betrieb der Steuerziel-Vorrichtungsgruppe gemäß (i) den Betriebsinformationen über jede der zugeordneten Vorrichtungsgruppen, wobei die Betriebsinformationen in Schritt (a) erhalten wurden, und (ii) ersten Steuereinstellinformationen, die im Voraus in einem Speicherabschnitt (115) gespeichert wurden,
wobei die ersten Steuereinstellinformationen für jede Kombination aus Betriebsstatus der zugeordneten Vorrichtungsgruppen Steuerinhalte, die in Bezug auf die Steuerziel-Vorrichtungsgruppe ausgeführt werden, spezifizieren, zu steuern, wobei:
(i) die Betriebsinformationen eines von (1) Informationen, die angeben, ob die repräsentative Vorrichtung, welche eine vorbestimmte von Vorrichtungen ist, die in jeder der zugeordneten Vorrichtungsgruppen bereitgestellt ist, die den Betriebsinformationen entspricht, sich in einem Betriebszustand oder einem angehaltenen Zustand befindet, (2) Informationen, die einen Betrag elektrischer Leistung angeben, der durch die repräsentative Vorrichtung verbraucht wird, die in jeder der zugeordneten Vorrichtungsgruppen bereitgestellt ist, (3) Informationen, die einen Gesamtbetrag elektrischer Leistung angeben, der durch jede der zugeordneten Vorrichtungsgruppen verbraucht wird, die den Betriebsinformationen entspricht, und (4) Informationen, die einen Gesamtbetrag elektrischer Leistung angeben, der durch die repräsentative Vorrichtung verbraucht wird, die in jeder der zugeordneten Vorrichtungsgruppen bereitgestellt ist, die den Betriebsinformationen entspricht, sind;
(ii) der Speicherabschnitt (115) zweite Einstellinformationen und dritte Einstellinformationen speichert,
wobei die zweiten Einstellinformationen in Abhängigkeit von einem Betriebsstatus der repräsentativen Vorrichtung, welche die vorbestimmte Vorrichtung ist, die im Voraus eingestellt wurde und in der Steuerziel-Vorrichtungsgruppe bereitgestellt ist, Steuerinhalte, die in Bezug auf die andere, nicht die repräsentative Vorrichtung, der Vorrichtungen, die in der Steuerziel-Vorrichtungsgruppe bereitgestellt ist, ausgeführt werden, spezifizieren,
wobei die dritten Einstellinformationen in Abhängigkeit von einem Betriebsstatus jeder der Vorrichtungen, die in der Steuerziel-Vorrichtungsgruppe bereitgestellt sind, Steuerinhalte, die in Bezug auf die repräsentative Vorrichtung der Steuerziel-Gruppe ausgeführt werden, spezifizieren.

10. Programm zum Veranlassen eines Computers, Schritte nach Anspruch 9 auszuführen.

11. Computerlesbares Aufzeichnungsmedium, in dem ein Programm nach Anspruch 10 aufgezeichnet ist.

## Revendications

1. Dispositif de commande (102) apte à commander un fonctionnement d'un groupe de dispositifs de cible de commande parmi une pluralité de groupes de dispositifs, chacun de la pluralité de groupes de dispositifs constituant une chaîne de production (1, ..., 5) d'une usine de production, dans lequel
chacun de la pluralité de groupes de dispositifs est composé d'une pluralité de dispositifs qui sont configurés pour traiter une pièce d'ouvrage qui est un objet à traiter, et qui sont étroitement associés l'un à l'autre en fonctionnement,
chacune de la pluralité de chaînes de production (1, ..., 5) inclut un dispositif de la pluralité de dispositifs réglé, à l'avance, en tant qu'un dispositif représentatif correspondant (12, 22, 31, 41, 52), le dispositif représentatif (a) étant étroitement associé, en termes de fonctionnement, à d'autres dispositifs du groupe de dispositifs constituant la chaîne de production dans laquelle le dispositif représentatif est prévu, et (b) effectuant un processus majeur dans la chaîne de production dans laquelle le dispositif représentatif est prévu, et
le dispositif représentatif du groupe de dispositifs de cible de commande est configuré pour obtenir des informations opérationnelles auprès de dispositifs représentatifs de groupes de dispositifs associés,
ledit dispositif de commande (102) comprenant :
une section d'obtention d'informations opérationnelles (113) qui est apte à obtenir, auprès de chacun des groupes de dispositifs associés, les informations opérationnelles indicatives d'un statut opérationnel de chacun des groupes de dispositifs associés, les groupes de dispositifs associés étant des groupes de dispositifs associés à l'avance au groupe de dispositifs de cible de commande parmi la pluralité de groupes de dispositifs ;
une section de stockage (115) stockant des premières informations de réglage de commande, les premières informations de réglage de commande spécifiant, pour chaque combinaison de statuts opérationnels des groupes de dispositifs associés, des contenus de commande réalisés en ce qui concerne le groupe de dispositifs de cible de commande ; et
une section de commande de fonctionnement (114) apte à commander un fonctionnement du groupe de dispositifs de cible de commande selon (i) les informations opérationnelles sur chacun des groupes de dispositifs associés, lesdites informations opérationnelles ayant été obtenues par la section d'obtention d'informations opérationnelles (113), et (ii) les premières informations de réglage de commande stockées dans la section de stockage (115),
dans lequel :
(i) les informations opérationnelles sont l'une quelconque (1) des informations indiquant si le dispositif représentatif, qui est l'un prédéterminé de dispositifs prévus dans chacun des groupes de dispositifs associés correspondant aux informations opérationnelles, est dans un état de fonctionnement ou dans un état arrêté, (2) des informations indicatives d'une quantité d'énergie électrique consommée par le dispositif représentatif prévu dans chacun des groupes de dispositifs associés, (3) des informations indicatives d'une quantité totale d'énergie électrique consommée par chacun des groupes de dispositifs associés correspondant aux informations opérationnelles, et (4) des informations indicatives d'une quantité totale d'énergie électrique consommée par le dispositif représentatif prévu dans chacun des groupes de dispositifs associés correspondant aux informations opérationnelles ;
(ii) la section de stockage (115) stocke des deuxièmes informations de réglage et des troisièmes informations de réglage,
les deuxièmes informations de réglage spécifiant, en fonction d'un statut opérationnel du dispositif représentatif qui est le dispositif prédéterminé réglé à l'avance et prévu dans le groupe de dispositifs de cible de commande, des contenus de commande réalisés en ce qui concerne le dispositif, autre que le dispositif représentatif, parmi les dispositifs prévus dans le groupe de dispositifs de cible de commande, et
les troisièmes informations de réglage spécifiant, en fonction d'un statut opérationnel de chacun des dispositifs prévus dans le groupe de dispositifs de cible de commande, des contenus de commande réalisés en ce qui concerne le dispositif représentatif du groupe de dispositifs de cible de commande.

2. Dispositif de commande selon la revendication 1, dans lequel :
le groupe de dispositifs de cible de commande est apte à fournir, à chacun des groupes de dispositifs associés, un objet que le groupe de dispositifs de cible de commande a traité ;
les premières informations de réglage de commande sont réglées de sorte que, au fur et à mesure que le nombre de groupes de dispositifs en fonctionnement des groupes de dispositifs associés, chacun d'eux traitant l'objet fourni par le groupe de dispositifs de cible de commande, diminue, le nombre d'objets traités par temps donné par le groupe de dispositifs de cible de commande diminue.

3. Dispositif de commande selon la revendication 1, dans lequel :
le groupe de dispositifs de cible de commande est apte à produire un produit en utilisant différents objets fournis par les groupes de dispositifs associés respectifs ; et
les premières informations de réglage de commande sont réglées de sorte que, dans le cas où l'un quelconque des groupes de dispositifs associés est dans un état arrêté, un fonctionnement du groupe de dispositifs de cible de commande soit commuté dans un état arrêté.

4. Dispositif de commande selon la revendication 1, dans lequel :
le groupe de dispositifs de cible de commande est apte à effectuer un processus commun en ce qui concerne un objet identique fourni par chacun des groupes de dispositifs associés ;
les premières informations de réglage de commande sont réglées de sorte que, au fur et à mesure que le nombre de groupes de dispositifs en fonctionnement des groupes de dispositifs associés, chacun d'eux fournissant l'objet identique au groupe de dispositifs de cible de commande, diminue, le nombre d'objets traités par temps donné par le groupe de dispositifs de cible de commande diminue.

5. Dispositif de commande selon l'une quelconque des revendications 1 à 4, dans lequel :
les premières informations de réglage de commande spécifiant, pour chaque combinaison des statuts opérationnels des groupes de dispositifs associés, des contenus de commande réalisés en ce qui concerne un dispositif représentatif qui est l'un prédéterminé de dispositifs prévus dans le groupe de dispositifs de cible de commande ;
la section de commande de fonctionnement (114) commande un fonctionnement du dispositif représentatif prévu dans le groupe de dispositifs de cible de commande, selon (i) les informations opérationnelles sur chacun des groupes de dispositifs associés, lesdites informations opérationnelles étant obtenues par la section d'obtention d'informations opérationnelles (113) et (ii) les premières informations de réglage de commande ; et
la section de commande de fonctionnement (114, 214) est apte à commander un fonctionnement du dispositif, autre que le dispositif représentatif, parmi les dispositifs prévus dans le groupe de dispositifs de cible de commande, en fonction du statut opérationnel du dispositif représentatif et des deuxièmes informations de réglage.

6. Dispositif de commande selon l'une quelconque des revendications 1 à 5, dans lequel :
la section de commande de fonctionnement (114, 214) est apte à commander un fonctionnement du dispositif représentatif prévu dans le groupe de dispositifs de cible de commande, selon (i) des informations qui sont reçues en provenance de chacun des dispositifs prévus dans le groupe de dispositifs de cible de commande et qui indiquent un statut opérationnel de chacun des dispositifs et (ii) les troisièmes informations de réglage ;
la section de commande de fonctionnement (114, 214) est apte à commander un fonctionnement du dispositif, autre que le dispositif représentatif, parmi les dispositifs prévus dans le groupe de dispositifs de cible de commande, selon le statut opérationnel du dispositif représentatif et les deuxièmes informations de réglage ; et
le dispositif de commande (102) inclut en outre : une section de génération d'informations opérationnelles (112) qui est apte à générer des informations opérationnelles indicatives du statut opérationnel du dispositif représentatif ; et une section de fourniture d'informations opérationnelles qui est apte à fournir, à chacun des groupes de dispositifs associés, les informations opérationnelles qui ont été générées par la section de génération d'informations opérationnelles (112).

7. Système pour commander une usine incluant une pluralité de groupes de dispositifs, chacun d'eux étant constitué d'une pluralité de dispositifs, le système comprenant :
un dispositif de commande selon l'une quelconque des revendications 1 à 6.

8. Système selon la revendication 7, comprenant en outre :
un dispositif partagé (61) qui est apte à effectuer un processus associé à des dispositifs dispersés dans une pluralité de groupes de dispositifs,
le dispositif partagé (61) incluant :
une section d'obtention qui est apte à obtenir, auprès de chacun des dispositifs associés au processus effectué par le dispositif partagé (61), des informations opérationnelles indicatives d'un statut opérationnel de chacun des dispositifs ;
une section de stockage de réglage dans laquelle des informations de réglage sont stockées, les informations de réglage spécifiant, pour chaque combinaison de statuts opérationnels des dispositifs, des contenus de commande réalisés en ce qui concerne le fonctionnement du dispositif partagé (61) ; et
une section de commande (102, 202) qui est apte à commander un fonctionnement du dispositif partagé selon (i) les informations opérationnelles sur chacun des dispositifs, lesdites informations opérationnelles yant été obtenues par la section d'obtention, et (ii) les informations de réglage stockées dans la section de stockage de réglage.

9. Procédé pour amener un dispositif de commande à commander un fonctionnement d'un groupe de dispositifs de cible de commande parmi une pluralité de groupes de dispositifs, chacun de la pluralité de groupes de dispositifs constituant une chaîne de production (1, ..., 5) d'une usine de production, dans lequel
chacun de la pluralité de groupes de dispositifs est composé d'une pluralité de dispositifs qui sont configurés pour traiter une pièce d'ouvrage qui est un objet à traiter, et qui sont étroitement associés l'un à l'autre en fonctionnement,
chacune de la pluralité de chaînes de production (1, ..., 5) inclut un dispositif de la pluralité de dispositifs réglé, à l'avance, en tant qu'un dispositif représentatif correspondant (12, 22, 31, 41, 52), le dispositif représentatif (a) étant étroitement associé, en termes de fonctionnement, à d'autres dispositifs du groupe de dispositifs constituant la chaîne de production dans laquelle le dispositif représentatif est prévu, et (b) effectuant un processus majeur dans la chaîne de production dans laquelle le dispositif représentatif est prévu, et
le dispositif représentatif du groupe de dispositifs de cible de commande est configuré pour obtenir des informations opérationnelles auprès de dispositifs représentatifs de groupes de dispositifs associés,
ledit procédé comprenant les étapes consistant à :
(a) amener le dispositif de commande à obtenir, auprès de chacun des groupes de dispositifs associés, des informations opérationnelles indicatives d'un statut opérationnel de chacun des groupes de dispositifs associés, les groupes de dispositifs associés étant des groupes de dispositifs associés à l'avance au groupe de dispositifs de cible de commande ; et
(b) amener le dispositif de commande à commander un fonctionnement du groupe de dispositifs de cible de commande selon (i) les informations opérationnelles sur chacun des groupes de dispositifs associés, lesdites informations opérationnelles ayant été obtenues à l'étape (a), et (ii) des premières informations de réglage de commande stockées à l'avance dans une section de stockage (115), les premières informations de réglage de commande spécifiant, pour chaque combinaison de statuts opérationnels des groupes de dispositifs associés, des contenus de commande réalisés en ce qui concerne le groupe de dispositifs de cible de commande, dans lequel :
(i) les informations opérationnelles sont l'une quelconque (1) des informations indiquant si le dispositif représentatif, qui est l'un prédéterminé de dispositifs prévus dans chacun des groupes de dispositifs associés correspondant aux informations opérationnelles, est dans un état de fonctionnement ou dans un état arrêté, (2) des informations indicatives d'une quantité d'énergie électrique consommée par le dispositif représentatif prévu dans chacun des groupes de dispositifs associés, (3) des informations indicatives d'une quantité totale d'énergie électrique consommée par chacun des groupes de dispositifs associés correspondant aux informations opérationnelles, et (4) des informations indicatives d'une quantité totale d'énergie électrique consommée par le dispositif représentatif prévu dans chacun des groupes de dispositifs associés correspondant aux informations opérationnelles ;
(ii) la section de stockage (115) stocke des deuxièmes informations de réglage et des troisièmes informations de réglage,
les deuxièmes informations de réglage spécifiant, en fonction d'un statut opérationnel du dispositif représentatif qui est le dispositif prédéterminé réglé à l'avance et prévu dans le groupe de dispositifs de cible de commande, des contenus de commande réalisés en ce qui concerne le dispositif, autre que le dispositif représentatif, parmi les dispositifs prévus dans le groupe de dispositifs de cible de commande, et
les troisièmes informations de réglage spécifiant, en fonction d'un statut opérationnel de chacun des dispositifs prévus dans le groupe de dispositifs de cible de commande, des contenus de commande réalisés en ce qui concerne le dispositif représentatif du groupe de dispositifs de cible de commande.

10. Programme pour amener un ordinateur à réaliser des étapes selon la revendication 9.

11. Support d'enregistrement lisible par ordinateur dans lequel un programme selon la revendication 10 est enregistré.
